# EUROPEAN PATENT APPLICATION

(11) **EP 4 708 189 A1**
(43) Date of publication of application: **11.03.2026**
(21) Application number: 25198588.3
(22) Date of filing: 28.08.2025
(51) Int. Cl.: G06Q 50/16

(54) **INFORMATION PROCESSING SYSTEM**

(30) Priority: 05.09.2024 JP 2024152834; 22.01.2025 JP 2025009156
(71) Applicant: Ricoh Company, Ltd., Tokyo 143-8555 (JP)
(72) Inventor: Motohashi, Naoki, Tokyo, 143-8555 (JP); Suzuki, Yuuki, Tokyo, 143-8555 (JP)
(74) Representative: SSM Sandmair

(57) **Abstract**

An information processing system (100) incudes a first server (20) to store information related to an item, a second server (40) to store image information of the item, and a terminal device (10) to communicate with the first server (20) and the second server (40). The terminal device (10) includes an input reception unit (12) and a display control unit (13). The display control unit (13) displays a first display screen including the information related to the item and the image information of the item. The information related to the item is received from the first server (20) while a session is established with the first server (20). The image information of the item is received from the second server (40) while a session is established with the first server (20) and a session is established with the second server (40). The display control unit (13) displays a second display screen including the image information of the item. The image information of the item being received from the second server (40) while a session is established with the second server (40). The second server (40) includes a processing unit (47) to execute first processing based on the image information of the item and input information received via the first display screen by the input reception unit (12) of the terminal device (10), or second processing based on the image information of the item and input information received via the second display screen by the input reception unit (12) of the terminal device (10).

## Description

### BACKGROUND

### Technical Field

The present disclosure relates to an information processing system.

### Related Art

A first server and a second server may manage related information. In this case, there is a known technique in which information managed by the first server and information managed by the second server are displayed on a terminal device (see, for example, Japanese Patent No. 6954410).

Japanese Patent No. 6954410 discloses a system in which information on a real estate property transmitted from a link information management system and a spherical image of the property transmitted from an image management system are displayed on a communication terminal.

In some cases, the first server and the second server manage related information. For example, the first server stores information, and the second server manages image information. In this case, when a user logs in to the first server from the terminal device, the terminal device can display the information. In a case where the user logs in directly to the second server from the terminal device, even when the second server can perform processing in accordance with the information, there is a case that it is inappropriate to provide the processing result to the user.

For example, in a case where the user logs in directly to the second server, whether the user is authorized to log in to the first server is unknown. In other words, the processing result may be provided to the user who is not authorized to use the information.

### SUMMARY

The present disclosure described herein provides an information processing system. The information processing system incudes a first server to store information related to an item, a second server to store image information of the item, and a terminal device to communicate with the first server and the second server. The terminal device includes an input reception unit and a display control unit. The display control unit displays a first display screen including the information related to the item and the image information of the item. The information related to the item is received from the first server while a session is established with the first server. The image information of the item is received from the second server while a session is established with the first server and a session is established with the second server. The display control unit displays a second display screen including the image information of the item. The image information of the item being received from the second server while a session is established with the second server. The second server includes a processing unit to execute first processing based on the image information of the item and input information received via the first display screen by the input reception unit of the terminal device, or second processing based on the image information of the item and input information received via the second display screen by the input reception unit of the terminal device.

According to one aspect of the present disclosure, a server that has established a session with a terminal can execute processing based on three-dimensional image information displayed on any one of multiple display screens of the terminal in response to an input to the display screen.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of an information processing system;
FIG. 2 is a block diagram illustrating a hardware configuration applicable to an image management server, a property information management server, and a terminal device;
FIG. 3 is a block diagram illustrating functional configurations of an image management server, a property information management server, and a terminal device in an information processing system;
FIG. 4 is a conceptual diagram illustrating an image information management table;
FIG. 5 is a conceptual diagram illustrating a property management information management table;
FIGS. 6A and 6B are diagrams illustrating display screens on a terminal device in a model update process and a text information generation process, respectively;
FIGS. 7A and 7B are diagrams illustrating display screens on a terminal device in a model update process and a text information generation process, respectively;
FIG. 8 is a sequence diagram illustrating a measurement process in which a user requests an image management server to measure a distance between two points on an item or a property;
FIG. 9 is a diagram illustrating a property designation screen;
FIG. 10 is a diagram illustrating a property management screen;
FIG. 11 is a diagram illustrating a property display screen;
FIG. 12 is a diagram illustrating a property display screen on which measurement results are displayed;
FIG. 13 is a sequence diagram illustrating a measurement process in which a user requests an image management server to measure a distance between two points on an item or a property;
FIG. 14 is a diagram illustrating an example of a property display screen including three-dimensional image information of a property;
FIG. 15 is a diagram illustrating an example of a property display screen on which measurement results are displayed;
FIG. 16 is a sequence diagram illustrating a model updating process;
FIG. 17 is a flowchart of a process of a determination unit to determine whether to update a first tacit knowledge model or a second tacit knowledge model;
FIG. 18 is a diagram illustrating an example of a property display screen including property management information and three-dimensional image information;
FIG. 19 is a sequence diagram illustrating a text information generation process;
FIG. 20 is a diagram illustrating a property display screen in an inference phase;
FIG. 21 is a diagram illustrating an example of a text image screen including text information;
FIG. 22 is a sequence diagram illustrating a model update process;
FIG. 23 is a diagram illustrating an example of a property display screen;
FIG. 24 is a sequence diagram illustrating a text information generation process;
FIG. 25 is a diagram illustrating an example of a property display screen in an inference phase;
FIG. 26 is a diagram illustrating an example of a text image screen including text information;
FIG. 27 is a sequence diagram illustrating a process in which an image management server updates a model through communication with a property information management server;
FIG. 28 is a sequence diagram illustrating a process in which the image management server executes a simulation;
FIG. 29 is a diagram illustrating an example of a property display screen;
FIG. 30 is a diagram illustrating an example of a simulation result screen;
FIG. 31 is a block diagram illustrating functional configurations of an image management server, a property information management server, and a terminal device in an information processing system;
FIG. 32 is a sequence diagram illustrating a process for generating text information and image information; and
FIG. 33 is a diagram illustrating an example of generated image information displayed on a text image screen.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An information processing system and an information processing method performed by the information processing system are described below with reference to the drawings.

### Supplementary Information Related to Tacit Knowledge

In industries such as civil engineering and construction, the implementation of building information modeling (BIM)/construction information modeling (CIM) has been promoted with the aim of addressing challenges such as a declining birthrate and aging population, as well as increasing labor productivity.

BIM refers to a solution that utilizes a database of buildings in which a three-dimensional digital model created on a computer is supplemented with attribute data, such as cost, finishes, and management information. This solution enables the effective use of information throughout a building lifecycle, including design, construction, and subsequent maintenance and management. The three-dimensional digital model may be referred to as a 3D model in the following description.

CIM is a solution that has been proposed for the field of civil engineering (widely covering infrastructure such as roads, electricity, gas, and water supply), following BIM that has been advanced in the field of construction. Similar to BIM, CIM is being promoted as an initiative to enhance and streamline a series of construction production systems by sharing information, particularly 3D models, among stakeholders.

In promoting BIM and CIM, a point is how to utilize the constructed BIM and CIM.

Specifically, the 3D models reconstructed through BIM and CIM can be utilized not only for design and construction purposes but also for other works, such as maintenance and management operations and site survey. In other words, 3D models can be used for other purposes, such as recording information in the models and sharing information with other stakeholders in addition to design drawings.

Operations performed on 3D models is recordable as logs. If tacit knowledge is extracted based on the operations, the tacit knowledge can be effectively used to transfer skills and expertise from experts to unexperienced workers. This is expected to contribute to, for example, front-loading of operations and human resource development.

Focusing on the transfer of tacit knowledge, a challenge is how to transfer tacit knowledge between different tasks or between users with different levels of skill as described above regardless of whether the data is two-dimensional (2D), such as spherical images or planar images, or 3D models.

Specifically, tacit knowledge is qualitative and difficult to quantify. Even when tacit knowledge models are generated from tacit knowledge, it is difficult to gain users' trust in tacit knowledge models and to promote the use of tacit knowledge models. For example, if the area of expertise of a tacit knowledge model differs from the area of expertise of the user, the tacit knowledge model is useless for the user no matter how excellent the tacit knowledge model is. Similarly, the tacit knowledge model is useless for the user if the knowledge level of the tacit knowledge model is lower than that of the user.

Tacit knowledge models, however, provide users with new perspectives and insights. Tacit knowledge models have potential for helping users with limited experience to obtain know-how and technical skills, and to use the obtained know-how and technical skills in work.

In some cases, a first server and a second server manage related information. For example, the first server stores property management information, and the second server manages three-dimensional property image information. In this case, when a user logs in to the first server from a terminal device, the terminal device can display the property management information. In a case that the user logs in directly to the second server from the terminal device, even when the second server can perform processing in accordance with the property management information, there is a case that it is inappropriate to provide the processing result to the user.

For example, in a case where the user logs in directly to the second server, whether the user is authorized to log in to the first server is unknown. Accordingly, in a case where the second server includes a first tacit knowledge model trained on inspection information of items, if the user logging in directly to the second server is given permission to use the first tacit knowledge model, the processing result is provided to the user who is not authorized to use the first tacit knowledge model.

Accordingly, in the present embodiment, an information processing system executes processing in response to a user logging in to a first server and executes processing in response to the user logging in to a second server.

### Terms

The term "user" refers to a person who uses text information or non-text content, such as images, generated or output by a tacit knowledge model. The term "data provider" refers to a person who provides data, such as audio information, text information, operation information, images, and 3D data, to be used by the tacit knowledge model for training.

The term "tacit knowledge" refers to knowledge based on, for example, personal experience and intuition. The term "tacit knowledge model" refers to a model that is trained on tacit knowledge and outputs an answer to a question based on what the model learned from the tacit knowledge. The term "model" refers to a mechanism or artificial intelligence (AI) that is trained on the correspondence between input data and output data, and outputs the output data in response to the input data. The output data may be generated through either supervised or unsupervised learning.

The term "property" refers to a space in which an item can be placed, such as a facility or a room in a facility. The term "item" refers to an object placed in a property. The type of item to be placed varies depending on the function of the facility.

Examples of such properties include, but are not limited to, real estate, industrial plants, construction sites, research institutions, medical facilities, agricultural lands, storage facilities, and other infrastructure requiring maintenance and management. Examples of such items include, but are not limited to, furniture, construction materials, equipment, heavy machinery, tools, instruments, raw materials, biological cultures, and food products.

The term "item-related information" is information on an item and includes the name of the item and the name of the property in which the item is placed, and is preferably information that can be tacit knowledge. For example, the item-related information is information known to a limited number of users.. In the following description, inspection information is an example of the item-related information. The item-related information may be other type of information such as the instruction manual for the item, a daily report of work performed on the item, a quotation for the item, or the design drawing of the item. The term "inspection" may encompass various activities such as investigation, testing, verification, assessment, and checking procedures.

The term "three-dimensional image information of an item" is an image of an item displayed on a display. The three-dimensional image information of an item is a planar image obtained by projecting the three-dimensional model of an item onto a two-dimensional plane. The viewpoint is changeable according to a user operation. The three-dimensional image information of an item may be a spherical image.

The term "first processing" refers to the update of the first tacit knowledge model or the generation of text information using inspection information, and the term "second processing" refers to the update of the second tacit knowledge model or the generation of text information without using inspection information (but using input information). The term "third processing" refers to a function unique to an image management server and refers to, for example, executing a simulation.

### First Embodiment

### Example of System Configuration

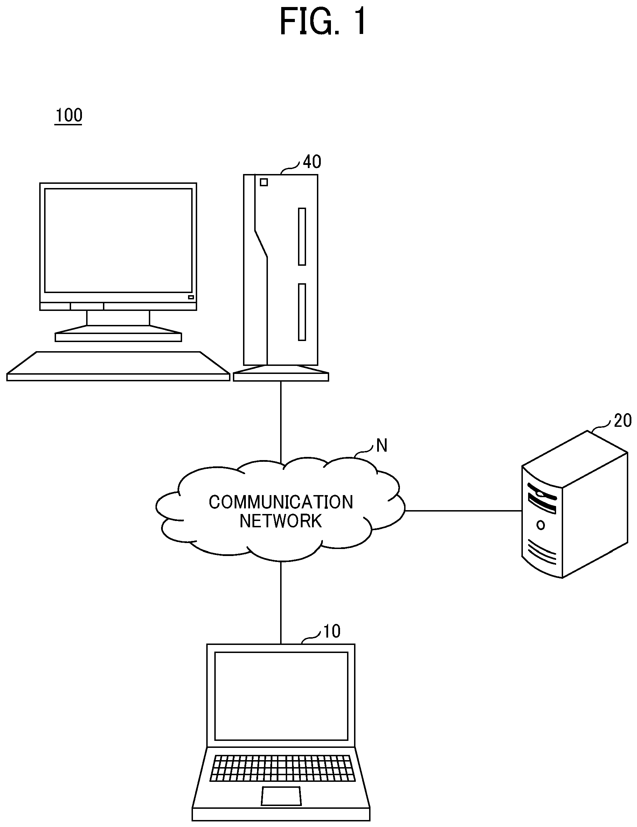

FIG. 1 is a schematic diagram of an information processing system 100. The information processing system 100 includes a terminal device 10, which is an example of an input and output device, an image management server 40, and a property information management server 20. The terminal device 10 may be external to the information processing system 100 as long as the terminal device 10 can be connected to the image management server 40 or the property information management server 20 as appropriate.

The image management server 40, which is an example of a second server, is one or more information processing apparatuses that communicate with the terminal device 10 via a communication network N. The image management server 40 manages three-dimensional image information of properties and includes a tacit knowledge model and a large-scale language model. The image management server 40 uses the tacit knowledge model and the large-scale language model to return text information including tacit knowledge to the user. The image management server 40 may be a web server that returns a processing result to the terminal device 10 in response to a request from the terminal device 10. The server is a computer or software that implements a function for providing information or a processing result in response to a request from a client.

The image management server 40 may support cloud computing. The term "cloud computing" refers to a model of computing in which resources on a network are used without being aware of specific hardware resources. Cloud computing may take any of various forms including Software as a Service (SaaS), Platform as a Service (PaaS), and Infrastructure as a Service (IaaS). For this reason, the image management server 40 does not need to be housed in a single housing or implemented by a single apparatus. The functions of the image management server 40 may be allocated among multiple information processing apparatuses. Alternatively, each of the multiple information processing apparatuses may have all the functions, and the apparatus that executes particular processing may be switched, for example, through load balancing.

The image management server 40 does not necessarily include the tacit knowledge model and the large-scale language model. Alternatively, the image management server 40 may call an application programming interface (API) published by an external system and use at least one of the tacit knowledge model and the large-scale language model.

The property information management server 20, which is an example of the first server, includes one or more information processing apparatuses that can communicate with the terminal device 10 via the communication network N. The property information management server 20 manages property management information. The property management information is, for example, a character string such as text. The property information management server 20 does not include three-dimensional image information or includes three-dimensional image information, if any, that is merely a photograph or the like different from an image managed by the image management server 40. The property information management server 20 is a server that allows a user to update property management information as appropriate to manage, for example, the progress of construction of a property or the arrangement of items.

The property information management server 20 may be a web server that returns a processing result to the terminal device 10 in response to a request from the terminal device 10. The property information management server 20 communicates with the image management server 40 via the communication network N. The property information management server 20 may support either cloud computing or on-premises environments.

The terminal device 10 is a general-purpose information processing terminal used by a user of the information processing system 100. On the terminal device 10, a web browser and a native application dedicated to the image management server 40 or the property information management server 20 operate. In a case where the terminal device 10 executes a web browser, the terminal device 10 and one of the image management server 40 and the property information management server 20 execute the web application. Specifically, a web application functions through the cooperation of a program written in a programming language (e.g., JAVASCRIPT) and executed on a web browser and a program executed on a web server (e.g., the image management server 40). When the web application is executed, the processing may be performed by the image management server 40, the property information management server 20, or the terminal device 10 that has received the web application.

An application that is not executed unless installed on the terminal device 10 is referred to as a native application. The application executed by the terminal device 10 may be a web application or a native application. Also in this case, the entity that performs the processing may be the image management server 40 or the terminal device 10 executing the native application.

The terminal device 10 is, for example, a personal computer (PC), a smartphone, a personal digital assistant (PDA), or a tablet terminal. The terminal device 10 may be any other device on which a web browser or a native application operates. The terminal device 10 may be an electronic whiteboard, a television receiver, a smart glass device, or a wearable device. Multiple terminal devices 10 may be included or connected to the information processing system 100.

The terminal device 10 communicates with the image management server 40 and the property information management server 20 via the communication network N. The communication network N is implemented by, for example, the Internet, a local area network (LAN), or a connection service provided by a network service provider. The communication network N may include not only wired communication networks but also mobile communication networks in compliance with, for example, the third generation (3G) of wireless mobile telecommunications technology, Worldwide Interoperability for Microwave Access (WiMAX), or Long-Term Evolution (LTE), and wireless LANs. The terminal device 10 supports short-range communication technologies, such as BLUETOOTH or near field communication (NFC).

In FIG. 1, the image management server 40, the property information management server 20, and the terminal device 10 communicate with each other via the communication network N. However, the user may directly operate the image management server 40 or the property information management server 20 from the control panel.

### Example of Hardware Configuration

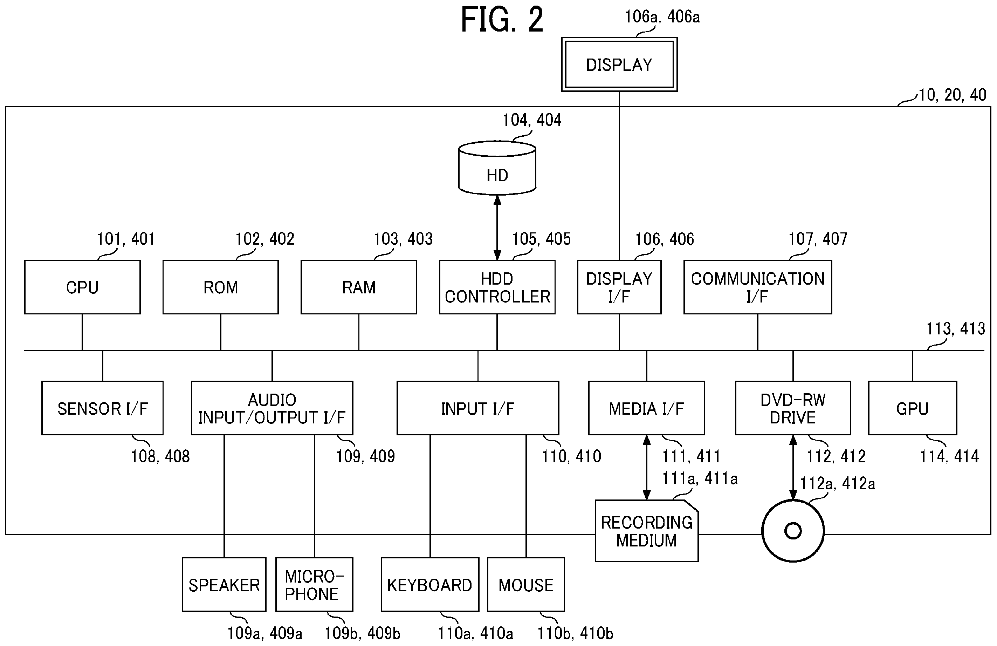

FIG. 2 is a block diagram illustrating a hardware configuration applicable to the image management server 40, the property information management server 20, and the terminal device 10. Each component of the hardware configuration applicable to the image management server 40 and the property information management server 20 is denoted by a reference numeral in the 400s. Each component of the hardware configuration applicable to the terminal device 10 is denoted by a reference numeral in the 100s.

The hardware configuration of the terminal device 10 is described below. Since the hardware configuration of the terminal device 10 is applicable to the image management server 40 and the property information management server 20, the descriptions thereof are omitted.

The terminal device 10 is implemented by a computer. As illustrated in FIG. 2, the terminal device 10 includes a central processing unit (CPU) 101, a read-only memory (ROM) 102, a random-access memory (RAM) 103, a hard disk (HD) 104, a hard disk drive (HDD) controller 105, a display interface (I/F) 106, and a communication I/F 107.

The CPU 101 controls the overall operation of the terminal device 10. The ROM 102 stores programs such as an initial program loader (IPL) to boot the CPU 101. The RAM 103 is used as a work area for the CPU 101.

The HD 104 stores various data, such as a control program. The HDD controller 105 controls the reading or writing of various data from or to the HD 104 under the control of the CPU 101.

The display I/F 106 is a circuit to control a display 106a to display an image.
The display 106a is, for example, a liquid crystal display or an organic electro-luminescence (EL) display and displays various types of information, such as a cursor, a menu, a window, characters, and an image. The communication I/F 107 is an interface used for communicating with other devices (external devices).

When the terminal device 10 is a smart glass device, the terminal device 10 may include a circuit to display images on a transmissive reflector, such as a lens, in place of the display I/F 106.

The communication I/F 107 is, for example, a network interface card (NIC) in compliance with Transmission Control Protocol/Internet Protocol (TCP/IP).

The terminal device 10 further includes a sensor I/F 108, an audio input/output I/F 109, an input I/F 110, a media I/F 111, a digital versatile disk rewritable (DVD-RW) drive 112, and a graphics processing unit (GPU) 114.

The sensor I/F 108 is an interface that receives information detected by various sensors. The audio input/output I/F 109 is a circuit that processes the input of sound signals from a microphone 109b and the output of sound signals to a speaker 109a under the control of the CPU 101. The input I/F 110 is an interface for connecting an input device to the terminal device 10.

A keyboard 110a is a type of input device that includes multiple keys for inputting, for example, characters, numerals, and various instructions. A mouse 110b is a type of input device to perform on a display screen operations, such as selecting or executing various types of instructions, selecting a subject to be processed, and moving a cursor.

The media I/F 111 controls the reading or writing (storing) of data to or from a recording medium 111a, such as a flash memory. The DVD-RW drive 112 controls the reading or writing of various data to or from a DVD-RW 112a, which is an example of a removable storage medium. The DVD-RW may be, for example, a digital versatile disc-recordable (DVD-R). The DVD-RW drive 112 may be a BLU-RAY drive to control the reading or writing of various data to or from a BLU-RAY disc.

The terminal device 10 further includes a bus line 113. Examples of the bus line 113 include an address bus and a data bus. The bus line 113 electrically connects the elements, such as the CPU 101, with one another.

The above-mentioned program may be stored in a storage medium, such as a hard disk (HD) and a compact disc-read-only memory (CD-ROM) and distributed domestically or internationally as a program product. The terminal device 10 implements an information processing method by, for example, executing a program.

### Functions

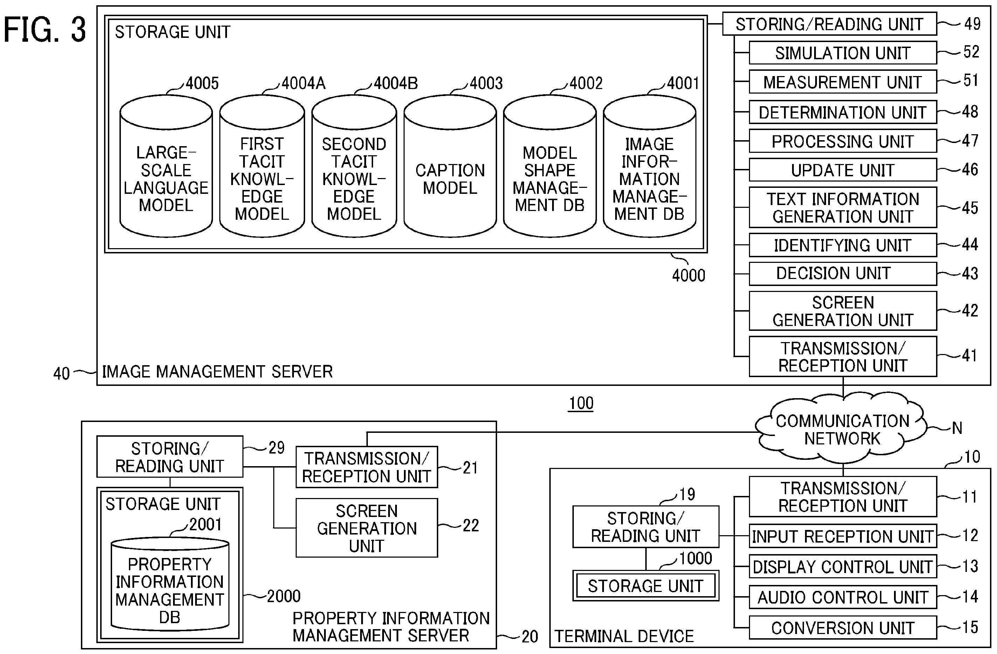

FIG. 3 is a block diagram illustrating functional configurations of the image management server 40, the property information management server 20, and the terminal device 10 in the information processing system 100.

### Terminal Device

As illustrated in FIG. 3, the terminal device 10 includes a transmission/reception unit 11, an input reception unit 12, a display control unit 13, an audio control unit 14, a conversion unit 15, and a storing/reading unit 19. These are units of functions implemented by or means caused to function by one or more of the elements illustrated in FIG. 2 operating in response to instructions from the CPU 101 according to the control program loaded from the HD 104 to the RAM 103. The terminal device 10 further includes a storage unit 1000, which is implemented by at least one of the RAM 103 and the HD 104 illustrated in FIG. 2.

The transmission/reception unit 11 is implemented by instructions from the CPU 101 illustrated in FIG. 2 and by the communication I/F 107 illustrated in FIG. 2. The transmission/reception unit 11 transmits and receives various data (or information) to and from another terminal, device, apparatus, or system via the communication network N.

The input reception unit 12 is implemented by, for example, instructions from the CPU 101 illustrated in FIG. 2 as well as the input I/F 110 and the audio input/output I/F 109 illustrated in FIG. 2. The input reception unit 12 receives various types of input from the user via the microphone 109b, the keyboard 110a, or the mouse 110b illustrated in FIG. 2.

The display control unit 13 is an example of an output control unit and implemented by instructions from the CPU 101 illustrated in FIG. 2 as well as the display I/F 106 illustrated in FIG. 2. The display control unit 13 displays various images and screens on the display 106a via the display I/F 106 according to instructions from the CPU 101. When the terminal device 10 is a smart glass device, the display control unit 13 displays virtual images on a transmissive reflector, such as a lens, in place of the display 106a.

The audio control unit 14 is an example of an output control unit and is implemented by instructions from the CPU 101 illustrated in FIG. 2 as well as the audio input/output I/F 109 illustrated in FIG. 2. The audio control unit 14 outputs audio through the speaker 109a, which is an example of a sound reproduction unit.

The conversion unit 15 is an example of a processing unit and is implemented by instructions from the CPU 101 illustrated in FIG. 2. The conversion unit 15 performs processing for converting text information into audio information and processing for converting audio information into text information.

The storing/reading unit 19 is an example of storage control unit and is implemented by instructions from the CPU 101 illustrated in FIG. 2 and by the HD 104, the media I/F 111, and the DVD-RW drive 112 illustrated in FIG. 2. The storing/reading unit 19 stores various data in the storage unit 1000, the recording medium 111a, or the DVD-RW 112a and reads various data from the storage unit 1000, the recording medium 111a, or the DVD-RW 112a.

### Functional Configuration of Image Management Server

The image management server 40 includes a transmission/reception unit 41, a screen generation unit 42, a decision unit 43, an identifying unit 44, a text information generation unit 45, an update unit 46, a processing unit 47, a determination unit 48, a measurement unit 51, a simulation unit 52, and a storing/reading unit 49. Each of these units is a function implemented by or means caused to function by any one or more of the hardware elements illustrated in FIG. 2 operating in accordance with instructions from the CPU 401 according to a program loaded onto the RAM 403 from the HD 404.

The image management server 40 further includes a storage unit 4000, which is implemented by the HD 404 illustrated in FIG. 2. The storage unit 4000 is an example of storage means.

In FIG. 3, one image management server 40 has all the functions, but the functions of the image management server 40 may be allocated among multiple computers.

The transmission/reception unit 41 is an example of a transmission unit or a reception unit and is implemented by instructions from the CPU 401 illustrated in FIG. 2 as well as the communication I/F 407 illustrated in FIG. 2. The transmission/reception unit 41 transmits and receives various data (or information) to and from another terminal, device, apparatus, or system via the communication network N.

The screen generation unit 42 is implemented by instructions from the CPU 401 illustrated in FIG. 2 and generates various screens. When the terminal device 10 executes a web application, the screen information is generated using languages such as Hypertext Markup Language (HTML), Extensible Markup Language (XML), Cascading Style Sheets (CSS), and JAVASCRIPT. Accordingly, the screen information may be referred to as a web application. When the terminal device 10 executes a client application, the terminal device 10 retains the screen information and receives information to be displayed in the format of, for example, XML.

The decision unit 43 is implemented by instructions from the CPU 401 illustrated in FIG. 2 and performs various kinds of determination described later.

The identifying unit 44 is implemented by instructions from the CPU 401 illustrated in FIG. 2. The identifying unit 44 identifies a target image.

The text information generation unit 45 is implemented by instructions from the CPU 401 illustrated in FIG. 2. The text information generation unit 45 acquires a tacit knowledge comment, based on a first tacit knowledge model 4004A or a second tacit knowledge model 4004B described below or generates text information, based on a large-scale language model 4005.

The update unit 46 is implemented by instructions from the CPU 401 illustrated in FIG. 2. The update unit 46 updates the first tacit knowledge model 4004A or the second tacit knowledge model 4004B.

The processing unit 47 is implemented by instructions from the CPU 401 illustrated in FIG. 2, and associates three-dimensional image information and a captured image with text information, which is an example of generation information, in accordance with processing requested by the user. The generation information is generated based on the three-dimensional image information, the captured image, and the inspection information or input information. Processing based on the inspection information and image information includes displaying the inspection information and the image information on a single screen, updating the first tacit knowledge model 4004A or the second tacit knowledge model 4004B, and generating text information based on the first tacit knowledge model 4004A or the second tacit knowledge model 4004B. The processing unit 47 requests, for example, the screen generation unit 42 or the text information generation unit 45 to perform processing in accordance with the content of processing.

The determination unit 48 is implemented by instructions from the CPU 401 illustrated in FIG. 2, and determines which of the first tacit knowledge model 4004A (an example of a first model) and the second tacit knowledge model 4004B (an example of a second model) is to be used. When the user has logged in to the image management server 40 via the property information management server 20, the determination unit 48 determines to use the first tacit knowledge model 4004A. When the user has logged in directly to the image management server 40, the determination unit 48 determines to use the second tacit knowledge model 4004B.

The measurement unit 51 is implemented by instructions from the CPU 401 illustrated in FIG. 2, and measures a distance between two points specified by the user.

The simulation unit 52 is implemented by instructions from the CPU 401 illustrated in FIG. 2, and performs a preset simulation on a property or an item. There are various types of simulations, such as predicting an airflow in the property, predicting a condition based on the size of an item in the property (e.g., whether the item can be carried in or installed), counting the number of items, and calculating the volume of a space.

The storing/reading unit 49 is an example of storage control unit and is implemented by instructions from the CPU 401 illustrated in FIG. 2 and by the HD 404, the media I/F 411, and the DVD-RW drive 412 illustrated in FIG. 2. The storing/reading unit 49 stores various data in the storage unit 4000, the recording medium 411a, or the DVD-RW 412a and reads various data from the storage unit 4000, the recording medium 411a, or the DVD-RW 412a. The storage unit 4000, the recording medium 411a, and the DVD-RW 412a are examples of storage means.

The storage unit 4000 includes an image information management DB 4001, a model shape management DB 4002, a caption model 4003, the first tacit knowledge model 4004A, the second tacit knowledge model 4004B, and the large-scale language model 4005.

The image information management DB 4001 manages (e.g., stores) three-dimensional image information of a property. The three-dimensional image information is information that visually represents an item (may be referred to as a model) placed in the property. The model shape management DB 4002 manages (e.g., stores) three-dimensional model shape information of the item placed in the property. The image management server 40 generates the three-dimensional image information of the property based on the three-dimensional model shape information. The three-dimensional model shape information is information used to render the item in three dimensions as, for example, a three-dimensional model or a three-dimensional point cloud. The three-dimensional model shape information may be in the format such as polygonal data or computer-aided design (CAD) data. The image information management DB 4001 or the model shape management DB 4002 may store a wide field image, such as a spherical image, of the property.

The caption model 4003 is generated through a training process using a combination of an image and a caption comment as training data, and causes a computer to output a caption comment based on the image. Caption comments are explicit knowledge and are used as expressions representing tacit knowledge. The caption comment is text data and is a comment explaining an image, among audio or text comments. A caption comment on a property or an item is associated with the identification information of the property or the item.

The first tacit knowledge model 4004A is generated through a training process using a correspondence between three-dimensional image information and inspection information of an item as training data, and causes a computer to function to output a tacit knowledge comment based on the image. The tacit knowledge comment is text data and is a comment other than a caption comment, that is, a comment relating to content not included in an image, among the comments expressed by voice or text. The first tacit knowledge model 4004A may be generated by executing a training process using the correspondence between three-dimensional image information and inspection information of an item and a comment as training data.

The second tacit knowledge model 4004B does not use inspection information for learning. That is, the second tacit knowledge model 4004B is generated through a training process using a correspondence between three-dimensional image information of an item and a comment as training data, and causes a computer to function to output a tacit knowledge comment based on the image.

The large-scale language model 4005 is a computer language model generated through a training process using a huge amount of unlabeled text as training data. The large-scale language model 4005 is constructed by an artificial neural network having a large number of parameters. Sufficient training through methods for learning contexts, such as next sentence prediction and masked language modeling, enables the large-scale language model 4005 to capture many of syntax and meanings of human words. In next sentence prediction, the context is understood, for example, by determining whether a first sentence and a second sentence are consecutive. In masked language modeling, the context is understood by masking a word in a sentence and predicting the masked word from the words preceding and subsequent thereto.

### Image Information Management Table

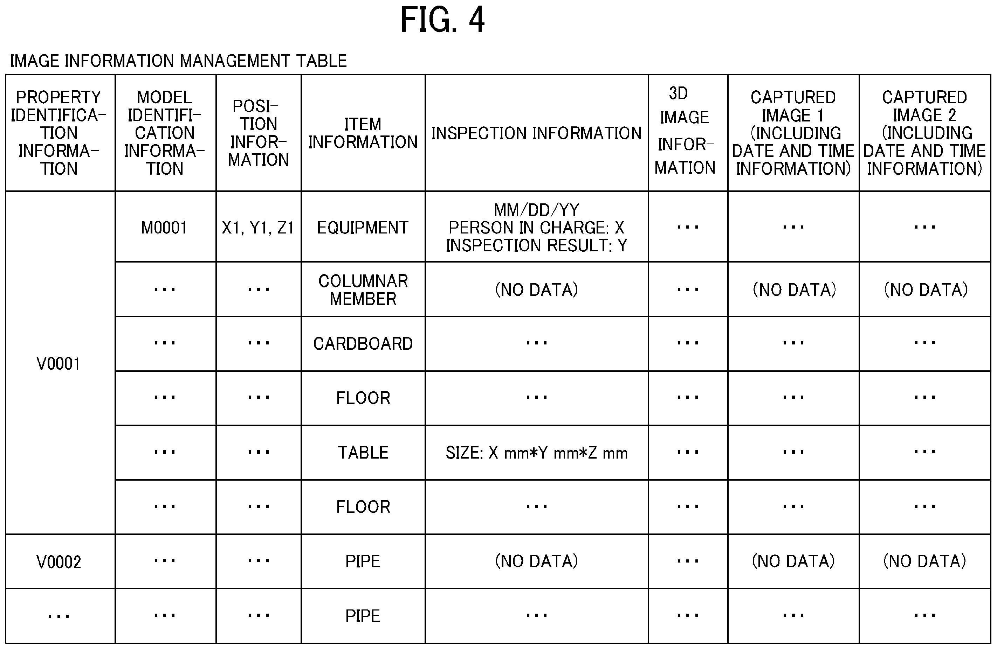

FIG. 4 is a conceptual diagram of an image information management table. The storage unit 4000 stores the image information management DB 4001 in the form of an image information management table as illustrated in FIG. 4.

In the image information management table in FIG. 4, model identification information, position information, item information, inspection information, three-dimensional image information (3D image information in FIG. 4), and one or more captured images are associated with property identification information. The term "property" refers to a space in which an item can be placed, such as a facility or a room in a facility. The items placed in a property vary depending on the function of the facility.

The property identification information is identification information for uniquely identifying a property.

The model identification information is identification information for identifying items placed in a property. Each item is associated with a three-dimensional model shape in the model shape management DB 4002 by the model identification information. The model identification information is the same as the model identification information in the property information management server 20. However, the model identification information may be associated with the model identification information in the property information management server 20 through a conversion table.

The item information indicates item names of items placed in a property. In FIG. 4, item names for which a construction site or a building site is assumed are presented. The item names vary depending on the property. While a property is associated with items in FIG. 4, the items may be registered independently of the property.

The position information is information indicating the position of an item in a property generated as a virtual space by using three-dimensional (XYZ) coordinates. The XYZ coordinates may be the coordinates of the center of gravity of the item or the coordinates of the vertices of a cube circumscribing the item.

The inspection information is information related to an inspection performed by the user to inspect an item in a property. The inspection information varies depending on the item or the purpose of the inspection, and may be, for example, information indicating whether the item is normal, the dimensions of the item, the inspection date and time, and the inspector. The inspection information is acquired from the property information management server 20. The property information management server 20 stores master inspection information, and the image management server 40 acquires the inspection information from the property information management server 20 and stores the inspection information. This is because the inspection of the item is performed with respect to the property information management server 20. For this reason, the image information management table may include the inspection information of only limited items, or the inspection information may not necessarily be up-to-date.

The inspection information may include photograph information obtained by photographing the inspected item. In this case, the update unit 46 analyzes the photograph information, extracts features such as an item in the photograph and the state of a scratch on the item, and treats the extracted features as inspection information in the form of character strings.

In addition to the inspection information, an instruction manual, a daily report, an estimate, a drawing, and the like may be registered in the image information management table.

The three-dimensional image information is information on a visual representation of an item, such as three-dimensional model shape information or a spherical image of the item. In FIG. 4, the image information management table contains the three-dimensional image information. The three-dimensional image information may be stored in the model shape management DB 4002.

Captured image 1 and captured image 2 are two-dimensional images acquired from the property information management server 20 together with the inspection information. The property information management server 20 stores master captured images. A captured image is, for example, a planar image of an item captured by an inspector during inspection. Thus, when the image information management DB 4001 stores inspection information, the image information management DB 4001 also stores a captured image in many cases. A plurality of captured images, such as the captured images 1 and 2, are stored because an image of an item may be captured each time the item is inspected. Three or more captured images may be stored. A captured image may be overwritten with the latest captured image to be stored. Each of the captured images 1 and 2 has an image capturing date and time.

### Functional Configuration of Property Information Management Server

Reference is made to FIG. 3. The property information management server 20 includes a transmission/reception unit 21, a screen generation unit 22, and a storing/reading unit 29. Each of these units is a function implemented by or means caused to function by any one or more of the hardware elements illustrated in FIG. 2 operating in accordance with instructions from the CPU 401 according to a program loaded onto the RAM 403 from the HD 404. The property information management server 20 further includes a storage unit 2000, which is implemented by the HD 404 illustrated in FIG. 2. The storage unit 2000 is an example of storage means.

In FIG. 3, a single property information management server 20 has all the functions described above. The property information management server 20 may have a configuration in which the functions are implemented by multiple computers in a distributed manner.

The transmission/reception unit 21 is an example of a transmission unit or a reception unit and is implemented by instructions executed by the CPU 401 illustrated in FIG. 2 and by the communication I/F 407 illustrated in FIG. 2. The transmission/reception unit 21 transmits and receives various data (or information) to and from another terminal, device, apparatus, or system via the communication network N.

The screen generation unit 22 is implemented by instructions from the CPU 401 illustrated in FIG. 2. The screen generation unit 22 generates various screens. When the terminal device 10 executes a web application, the screen information is generated using languages such as HTML, XML, CSS, and JAVASCRIPT. Accordingly, the screen information may be referred to as a web application. When the terminal device 10 executes a client application, the terminal device 10 retains the screen information and receives information to be displayed in the format of, for example, XML.

The storing/reading unit 29 is an example of storage control unit and is implemented by instructions from the CPU 401 illustrated in FIG. 2 and by the HD 404, the media I/F 411, and the DVD-RW drive 412 illustrated in FIG. 2. The storing/reading unit 29 stores various data in the storage unit 2000, the recording medium 411a, or the DVD-RW 412a and reads various data from the storage unit 2000, the recording medium 411a, or the DVD-RW 412a. The storage unit 2000, the recording medium 411a, and the DVD-RW 412a are examples of storage means.

### Property Management Information Management Table

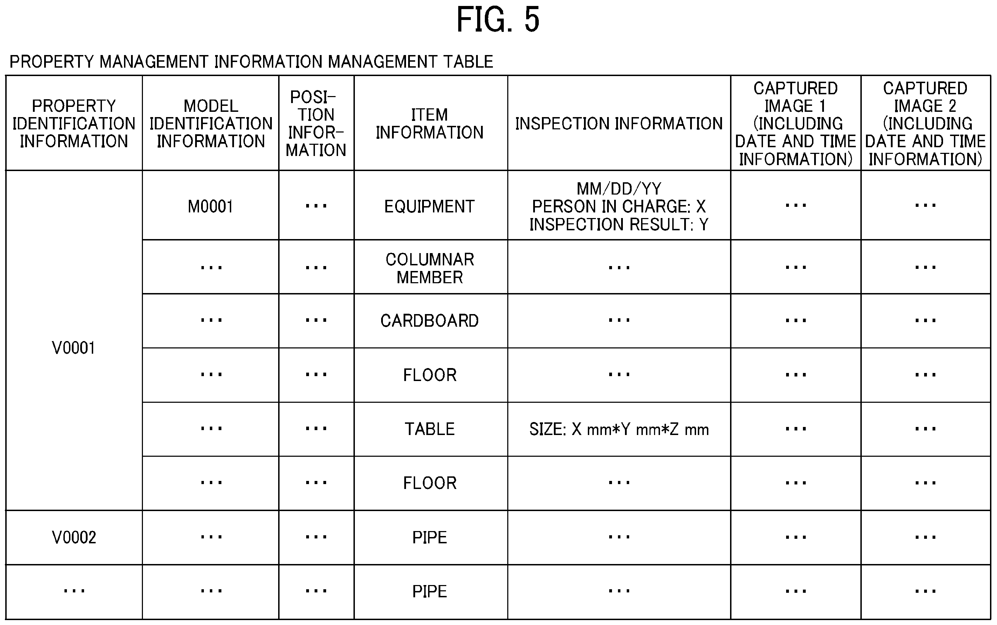

FIG. 5 is a conceptual diagram illustrating a property management information management table. The storage unit 2000 stores a property information management DB 2001 in the form of a property management information management table as illustrated in FIG. 5.

The property management information management table manages model identification information, position information, item information, inspection information, and one or more captured images in association with property identification information. The property identification information, the model identification information, the position information, the item information, the inspection information, and the one or more captured images may be referred to as property management information. In one example, the content of the property management information is similar to that of the image information management table. That is, no three-dimensional image information is stored in the property management information management table. The inspection information and the one or more captured images are recorded for all the items that have been inspected at least once. The inspection information in the property information management server 20 is inspection information directly registered by the user, and is thus a master from which (a copy of) the inspection information in the image management server 40 is made. The one or more captured images may be captured images of a plurality of items or may be images other than captured images, such as layout diagrams.

Instead of including the property management information management table described above, the property information management DB 2001 may include a property management information management table in which position information, item information, inspection information, and a captured image are managed in association with model identification information rather than in association with property identification information.

### Example of Model Update and Text Information Generation

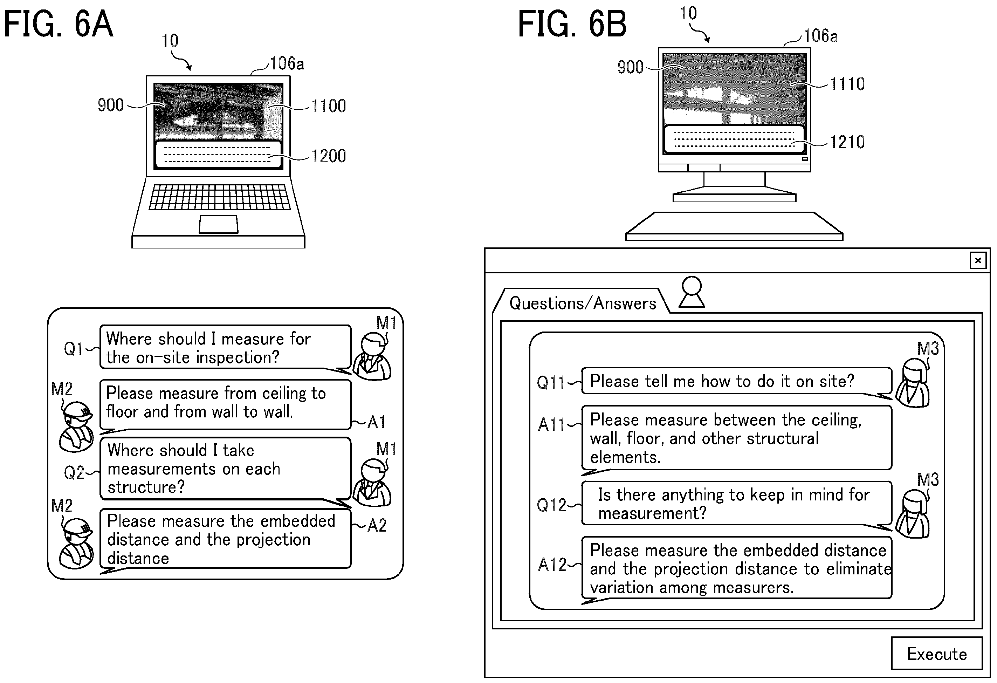

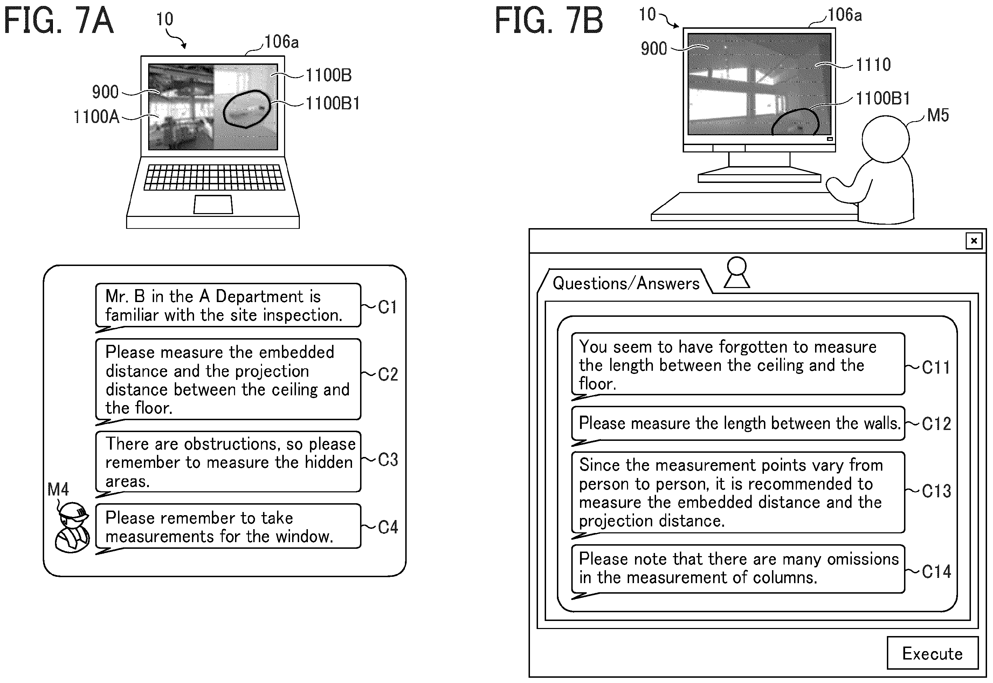

A model update method and a text information generation method are described below with reference to FIGs. 6A, 6B, 7A, and 7B. In FIGS. 6A to 7B, the inspection information is not used for updating the model and generating the text information. However, learning can be similarly performed by using the inspection information in place of or in addition to the conversations including an utterance Q1 and the like, described below.

FIGs. 6A and 6B are diagrams illustrating an example of screens displayed on the terminal device 10 in a model update process and a text information generation process, respectively. FIG. 6A illustrates the model update process. The display control unit 13 of the terminal device 10 causes the display 106a to display a display screen 900 received from the image management server 40. The display screen 900 includes a target image 1100 and a text 1200.

The input reception unit 12 of the terminal device 10 receives, as input information input by a data provider on the displayed display screen 900, voice information indicating utterances Q1, A1, Q2, and A2 made by data providers M1 and M2 via the microphone 109b. The data providers M1 and M2 preferably have a wealth of knowledge including tacit knowledge about work. A tacit knowledge model, such as the first tacit knowledge model or the second tacit knowledge model, is updated based on such interactions between the data providers M1 and M2, thus allowing the user to acquired useful tacit knowledge comments.

The identifying unit 44 identifies the target image 1100, which is a portion obtained by excluding the text 1200 from the display screen 900.

Then, the decision unit 43 determines the levels of relevance between a caption comment acquired from the caption model 4003 using the target image 1100 and the utterances Q1, A1, Q2, and A2.

The update unit 46 updates the tacit knowledge model using training data including the target image 1100 and a tacit knowledge comment that is a comment determined to have a low level of relevance among the utterances Q1, A1, Q2, and A2, and updates the caption model 4003 using training data including the target image 1100 and a caption comment that is a comment determined to have a high level of relevance among the utterances Q1, A1, Q2, and A2.

Thus, the tacit knowledge model learns the correspondence between the target image 1100 and the utterances Q1, A1, Q2, and A2. Features are extracted from the target image 1100 using some feature extraction models suitable for images, such as convolutional neural network (CNN) models. The features represent, for example, objects that appear in an image and positions of the objects appearing in the image, or operations that are being performed in the image. Thus, the tacit knowledge model can learn the correspondence between the features of the image and the utterances Q1, A1, Q2, and A2.

FIG. 6B illustrates the text information generation process.

The display control unit 13 of the terminal device 10 causes the display 106a to display the display screen 900 received from the image management server 40. The display screen 900 includes an image 1110 and a text 1210.

The input reception unit 12 of the terminal device 10 receives, as input information input by a user on the displayed display screen 900, voice information indicating questions Q11 and Q12 uttered by a user M3 via the microphone 109b.

The identifying unit 44 identifies the image 1110, which does not include the text 1210, as a target image.

The text information generation unit 45 acquires a tacit knowledge comment, based on the tacit knowledge model, by using the image 1110. The tacit knowledge model extracts a feature from the image 1110, determines that the feature of the image 1110 illustrated in FIG. 6B is similar to that of the image 1110 at the time of update, and can identify the utterances Q1, A1, Q2, and A2 related to the image 1110. The utterances Q1, A1, Q2, and A2 are set as tacit knowledge comments.

Further, the text information generation unit 45 uses, for example, the tacit knowledge comments (i.e., the utterances Q1, A1, Q2, and A2) and the questions Q11 and Q12 to generate text information related to answers A11 and A12 to the questions Q11 and Q12, respectively, based on the large-scale language model 4005.

The display control unit 13 of the terminal device 10 causes the display 106a to display the text information related to the answers A11 and A12 received from the image management server 40.

FIGS. 7A and 7B are diagrams each illustrating another display screen on the terminal device 10 in the model update process and the text information generation process, respectively. FIGs. 7A and 7B illustrate a case in which no question sentences are used for model update and text information generation.

FIG. 7A illustrates the model update process. In an example illustrated in FIG. 7A, the tacit knowledge model is updated based on voice information of one data provider and a partial image, rather than based on conversations between data providers.

The display control unit 13 of the terminal device 10 causes the display 106a to display the display screen 900 received from the image management server 40. The display screen 900 includes a first image 1100A and a second image 1100B.

The input reception unit 12 of the terminal device 10 receives, as input information input by a data provider on the displayed display screen 900, character information indicating comments C1 to C4 made by a data provider M4 using the keyboard 110a.

The input reception unit 12 also receives, as input information input by the data provider M4 on the displayed display screen 900, operation information indicating an operation performed by the data provider M4 to identify a partial image 1100B1 in the second image 1100B, from the mouse 110b.

The identifying unit 44 may identify the partial image 1100B1 as the target image, or may identify the first image 1100A or the second image 1100B as the target image.

Then, the decision unit 43 determines the levels of relevance between the caption comment acquired from the caption model 4003 using the target image and the comments C1 to C4.

The update unit 46 updates the tacit knowledge model using, as training data, the partial image 1100B1 or the like and a tacit knowledge comment that is a comment determined to have a low level of relevance among the comments C1 to C4, and updates the caption model 4003 using, as training data, the partial image 1100B1 and a caption comment that is a comment determined to have a high level of relevance among the comments C1 to C4.

Thus, the tacit knowledge model learns the correspondence between the partial image 1100B1 and the comments C1 to C4. Features are extracted from the partial image 1100B1 using some feature extraction models suitable for images, such as CNN models. The features represent, for example, objects that appear in an image and positions of the objects appearing in the image, or operations that are being performed in the image. Thus, the tacit knowledge model can learn the correspondence between the features of the image and the comments C1 to C4.

FIG. 7B illustrates the text information generation process. The display control unit 13 of the terminal device 10 causes the display 106a to display the display screen 900 received from the image management server 40. The display screen 900 includes the image 1110.

A user M5 does not perform an input on the displayed display screen 900, and the input reception unit 12 does not receive input information input by any user on the displayed display screen 900. The identifying unit 44 identifies the image 1110, which is the entire display screen 900, as the target image.

When the user M5 performs an operation to identify the partial image 1100B1 on the display screen 900, the input reception unit 12 receives, as input information, operation information indicating the operation of identifying the partial image 1100B1, from the mouse 110b. In this case, the identifying unit 44 identifies the partial image 1100B1 on the display screen 900 as the target image in accordance with the operation information.

The text information generation unit 45 acquires a tacit knowledge comment, based on the tacit knowledge model, by using the partial image 1100B1. The tacit knowledge model determines that the feature of the image 1110B1 illustrated in FIG. 7B is similar to the feature of the image 1110B1 at the time of update, and can identify the comments C1 to C4 related to the image 1110B1. The tacit knowledge model extracts the comments C1 to C4 as tacit knowledge comments.

The text information generation unit 45 uses, for example, the tacit knowledge comments to generate text information related to the comments C11 to C14, based on the large-scale language model 4005. The text information generation unit 45 may generate the text information using a preset standard question when no question sentences are input, rather than using a method in which no questions are used.

The display control unit 13 of the terminal device 10 causes the display 106a to display the text information related to the comments C11 to C14 received from the image management server 40.

### Operation or Processing

### Login to Image Management Server via Property Information Management Server

First, a case in which a user measures a distance between two points with respect to three-dimensional image information of a property is described.

The user may log in to the image management server 40 via the property information management server 20 or may log in directly to the image management server 40. The measurement results are the same regardless of the way in which the user logs in.

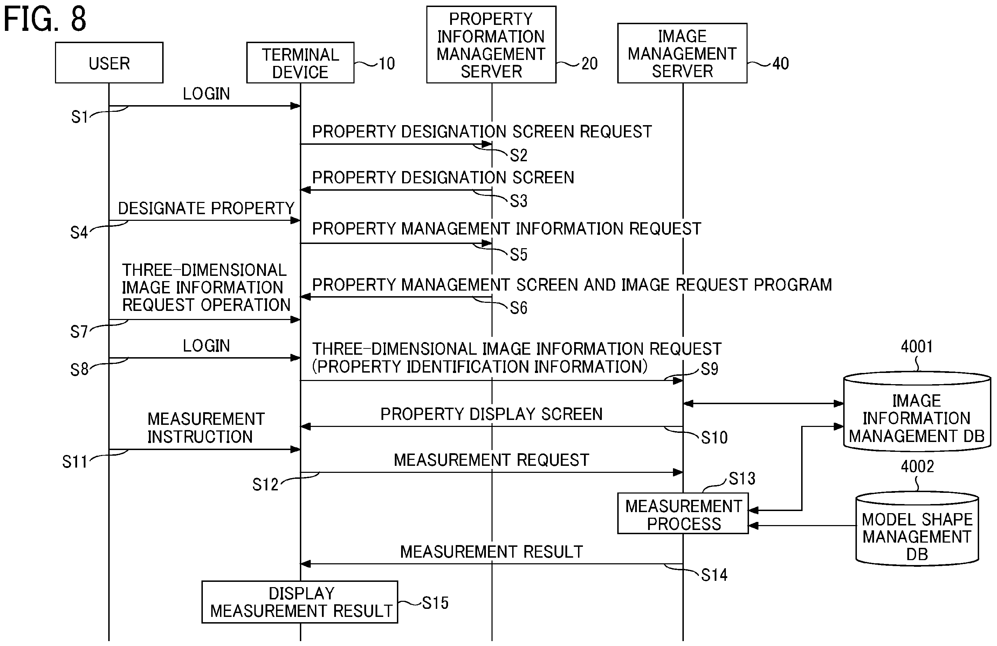

A case in which a user logs in to the image management server 40 via the property information management server 20 is described with reference to FIG. 8. FIG. 8 is a sequence diagram illustrating an example of a measurement process in which a user requests the image management server 40 to measure a distance between two points on an item or a property.

S1: The user inputs a login operation to the terminal device 10. This login is to log in to the property information management server 20. The input reception unit 12 of the terminal device 10 receives the login operation. Any existing method may be used to perform the login. The following description is given on the assumption that the login is successful.

When the login is successful, a session is established between the terminal device 10 and the property information management server 20. The processing between the terminal device 10 and the property information management server 20 is performed while the session is being established.

The user logs in to the property information management server 20 and then logs in to the image management server 40. Alternatively, the user may log in to the image management server 40 first and then log in to the property information management server 20.

S2: In response to a successful login, the transmission/reception unit 11 of the terminal device 10 transmits a request for a property designation screen 200 to the property information management server 20.

S3: The transmission/reception unit 21 of the property information management server 20 receives the request for the property designation screen 200. The screen generation unit 22 generates the property designation screen 200, and the transmission/reception unit 21 transmits the screen information of the property designation screen 200 to the terminal device 10.

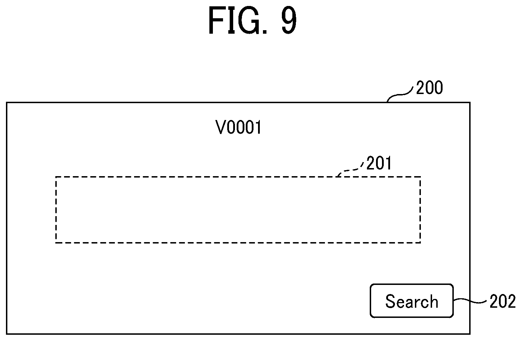

S4: The transmission/reception unit 11 of the terminal device 10 receives the screen information of the property designation screen 200. The display control unit 13 displays the property designation screen 200 (see FIG. 9). The user enters property identification information (e.g., V0001) on the displayed property designation screen 200. The input reception unit 12 of the terminal device 10 receives the property identification information.

S5: The transmission/reception unit 11 of the terminal device 10 designates the property identification information and transmits a request for the property management information to the property information management server 20.

S6: The transmission/reception unit 21 of the property information management server 20 receives the request for the property management information, and the storing/reading unit 29 searches the property information management DB 2001 using the property identification information. The property management information is information related to a property associated with the property identification information. The screen generation unit 22 of the property information management server 20 generates a property management screen 210 for displaying the property management information, and the transmission/reception unit 21 transmits the screen information of the property management screen 210 to the terminal device 10.

In response to the request for the property management information, furthermore, the transmission/reception unit 21 transmits an image request program to the terminal device 10 so that the terminal device 10 can acquire three-dimensional image information. The image request program is, for example, a web application. The web application is installed in the property information management server 20 by the operator of the image management server 40 under the permission of the operator of the property information management server 20. Alternatively, a uniform resource locator (URL) indicating the location of the image request program may be transmitted to the terminal device 10.

The web application, which is configured to acquire three-dimensional image information from the image management server 40, has a function of connecting to the image management server 40 and transmitting a request for the three-dimensional image information or displaying the three-dimensional image information.

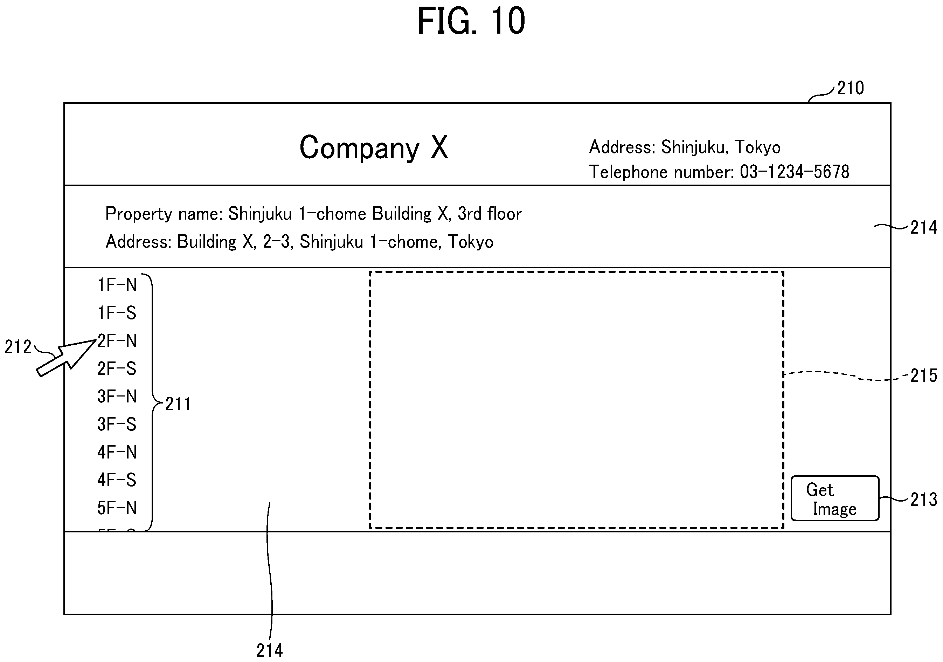

S7: The transmission/reception unit 11 of the terminal device 10 receives the screen information of the property management screen 210 and the image request program. The display control unit 13 displays the property management screen 210 (see FIG. 10). As a result, the property management information is displayed. The user performs, on the displayed property management information, an operation (such as pressing an image acquisition button 213) of transmitting a request for the three-dimensional image information of the property. The input reception unit 12 of the terminal device 10 receives the operation of transmitting the request for the three-dimensional image information of the property. The three-dimensional image information of the property is the three-dimensional image information of an item placed in the property, which is generated as the virtual space. The three-dimensional image information of the item includes 3D model shape information. Since the property has been identified, the request for the three-dimensional image information of the property may be transmitted to the image management server 40 without an operation by the user.

The property management screen 210 includes a first display area 214 for displaying information related to an item acquired from the property information management server 20 and a second display area 215 for displaying the three-dimensional image information of the item acquired from the image management server 40. In step S7, the property management information is displayed in the first display area 214, whereas no information is displayed in the second display area 215.

S8: If the user has not logged in to the image management server 40, the user inputs a login operation to the terminal device 10. The login operation is to log in to the image management server 40.

The input reception unit 12 of the terminal device 10 receives the login operation. Any existing method may be used to perform the login. The following description is given on the assumption that the login is successful. The image management server 40 may use, for example, single sign-on to omit the login operation by the user. When the login is successful, a session is established between the terminal device 10 and the image management server 40. The processing between the terminal device 10 and the image management server 40 is performed while the session is being established.

S9: The terminal device 10 executes the image request program to make a request for the three-dimensional image information.

Accordingly, the transmission/reception unit 11 designates the property identification information of the property selected by the user and transmits a request for the three-dimensional image information of the property to the image management server 40. Preferably, the transmission/reception unit 11 transmits the URL of the property information management server 20 to the image management server 40 so that the terminal device 10 can be redirected to the property information management server 20. The three-dimensional image information of the property is an image of an item placed in the property in the virtual space. Since the three-dimensional image information of the item includes 3D model shape information, the terminal device 10 two-dimensionally projects the three-dimensional model shape of the item to generate a planar image. The user can view any item while adjusting (changing) the viewpoint. The transmission/reception unit 11 may transmit the property management information acquired from the property information management server 20 to the image management server 40.

For example, the image request program receives the property management information as a URL parameter from a web application connected to the property information management server 20.

S10: The transmission/reception unit 41 of the image management server 40 receives, for example, the request for the three-dimensional image information of the property together with the property identification information. The storing/reading unit 49 searches the image information management DB 4001 using the property identification information and acquires three-dimensional image information of each item. The processing unit 47 requests the screen generation unit 42 to generate a screen including the three-dimensional image information of each property. The screen generation unit 42 generates a screen corresponding to the second display area 215 in which the three-dimensional image information of each item is arranged. The transmission/reception unit 41 transmits screen information of the screen corresponding to the second display area 215 to the terminal device 10. The three-dimensional image information of each item, which is included in the screen information, is three-dimensional image information in which all the items included in the property are placed in the property, and the viewpoint is changeable (adjustable) according to a user operation as desired.

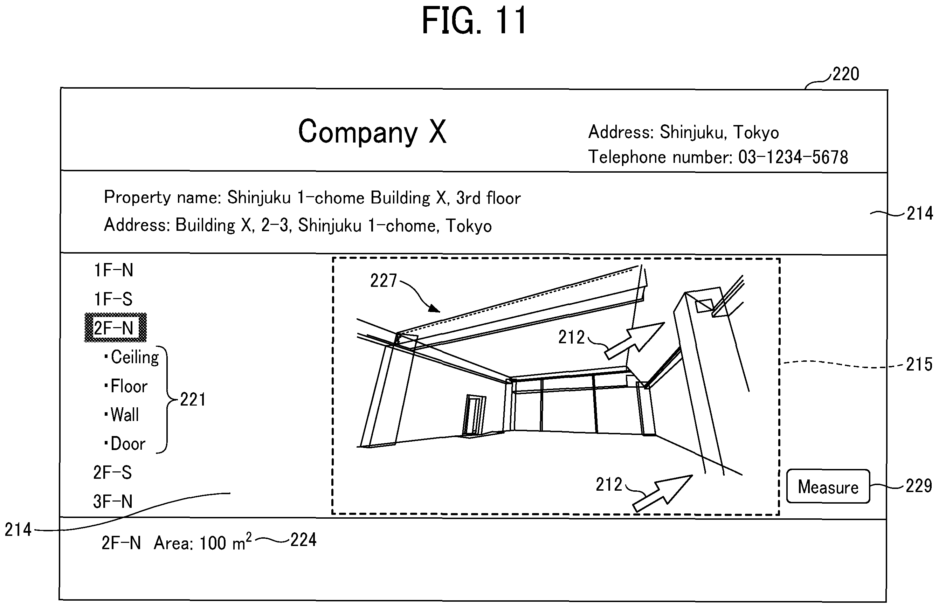

S11: The transmission/reception unit 11 of the terminal device 10 receives the screen information of the screen corresponding to the second display area 215, and the display control unit 13 displays a property display screen 220 including the first display area 214 and the second display area 215 (see FIG. 11). The second display area 215 displays the three-dimensional image information of each item, and the first display area 214 displays, for example, a list of items placed in the property (the list is generated from the property management information). Thus, the list of items and the three-dimensional image information of the property are displayed on one screen. Then, the user uses, for example, the mouse cursor 212 to designate two points between which the distance is to be measured with respect to the three-dimensional image information of the property. The input reception unit 12 of the terminal device 10 receives the coordinates of the two points on the item.

S12: In response to the user pressing a measurement button 229, the transmission/reception unit 11 of the terminal device 10 designates the coordinates of the two points and transmits a measurement request to the image management server 40.

S13: The transmission/reception unit 41 of the image management server 40 receives the measurement request. The measurement unit 51 searches the image information management DB 4001 based on the coordinates and identifies the item (model identification information).

The measurement unit 51 further searches the model shape management DB 4002 using the model identification information and acquires the three-dimensional model shape information of the item. The measurement unit 51 measures the distance between the two points defined by the coordinates, based on the three-dimensional model shape information.

S14: The transmission/reception unit 41 of the image management server 40 transmits the measurement result (i.e., the distance between the two points defined by the coordinates) to the terminal device 10.

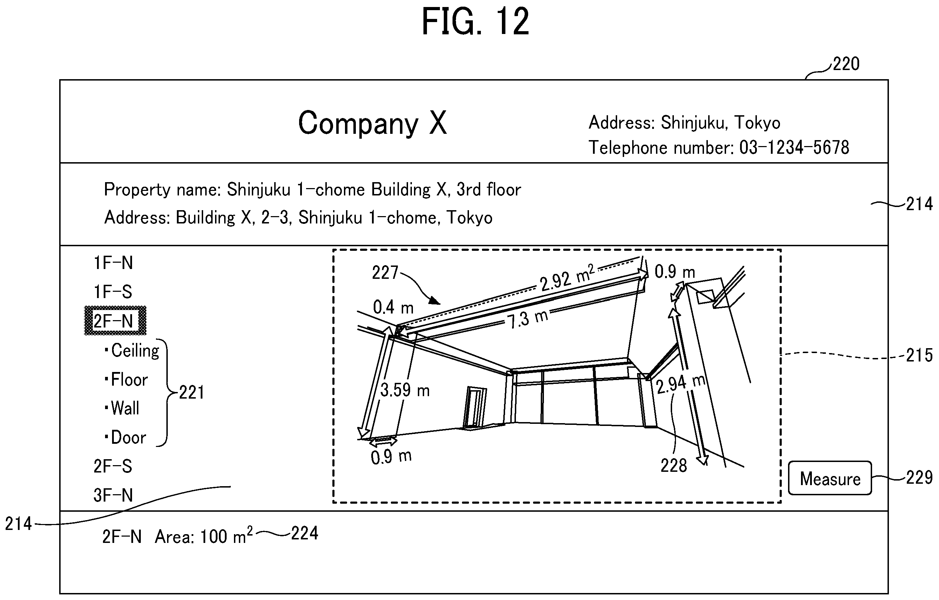

S15: The transmission/reception unit 11 of the terminal device 10 receives the measurement result, and the display control unit 13 displays the measurement result together with the three-dimensional image information of the property (see FIG. 12).

### Example Screens

FIG. 9 illustrates an example of the property designation screen 200 for inputting property identification information. The property designation screen 200 includes a property identification information input field 201 and a search button 202. In response to the user entering property identification information in the property identification information input field 201 and pressing the search button 202, a room number list is displayed on the property management screen 210, as illustrated in FIG. 10.

FIG. 10 illustrates an example of the property management screen 210. The property management screen 210 includes the first display area 214 for displaying information related to an item acquired from the property information management server 20 and the second display area 215 for displaying the three-dimensional image information of the item acquired from the image management server 40. The first display area 214 includes a room number list 211, which is a list of room numbers in the property identified by the property identification information. The room number list 211 corresponds to the property management information and includes, for example, items included in each property. Depending on the property, the display of room numbers may be omitted, and the property designation screen 200 illustrated in FIG. 9 may transition to a screen illustrated in FIG. 11 to display the three-dimensional image information of the property. The user uses the mouse cursor 212 to select a room number for which the three-dimensional image information is to be displayed. In response to the user pressing the image acquisition button 213, the property display screen 220 is displayed.

FIG. 11 illustrates the property display screen 220 including property management information and three-dimensional image information. The property display screen 220 includes the first display area 214 and the second display area 215, and the first display area 214 on the property display screen 220 displays an item list 221. The items in the room of interest include a ceiling, a floor, a wall, and a door. The second display area 215 on the property display screen 220 displays three-dimensional image information 227 of these items. The user uses the mouse cursor 212 to designate two points between which the distance is to be measured. In FIG. 11, two points on the wall are designated. In response to the user pressing the measurement button 229, the image management server 40 starts the measurement of the distance between the two points.

The property display screen 220 also displays a size (floor area) 224 as information related to the property. The size (floor area) 224 may be a measured value or may be included in the property management information.

The screen as illustrated in FIG. 11 on which the property management information (the room number list 211 and the names of the items) and the three-dimensional image information 227 of the property are displayed is an example of a first display screen.

FIG. 12 illustrates the property display screen 220 on which measurement results are displayed. As can be seen from the comparison with FIG. 11, a distance 228 between two points is displayed as a measurement result.

As described above, in a case where the user logs in to the image management server 40 via the property information management server 20, the terminal device 10 can display the property management information and the three-dimensional image information of the property on a single screen. The user can perform work using the three-dimensional image information of the property, such as measuring the distance 228 between two points, while viewing the property management information.

### Direct Login to Property Information Management Server

Next, a case in which the user logs in directly to the image management server 40 to measure a distance between two points is described.

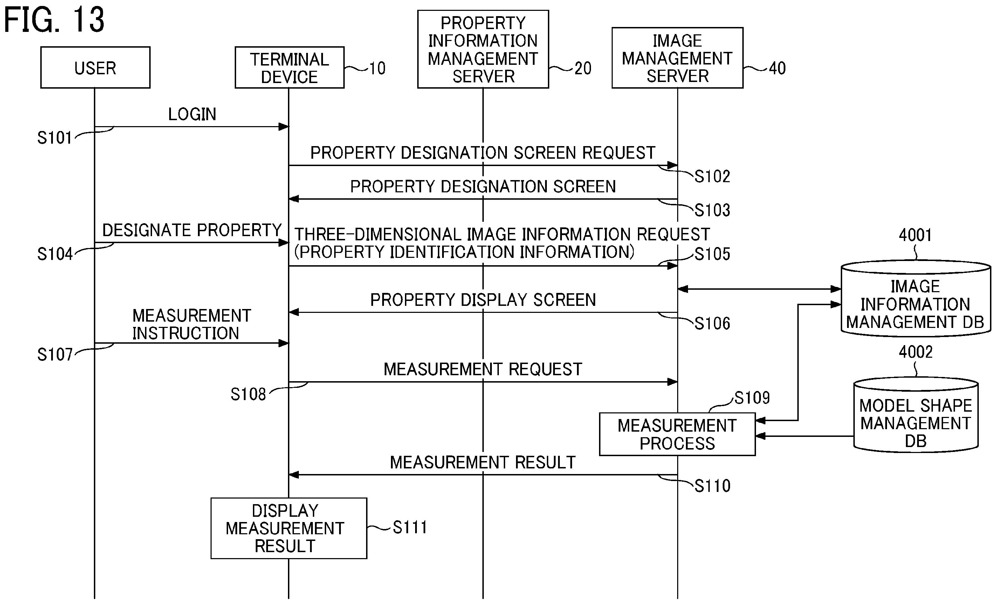

FIG. 13 is a sequence diagram illustrating an example of a measurement process in which a user requests the image management server 40 to measure a distance between two points on an item or a property.

S101: The user inputs a login operation to the terminal device 10. This login is to log in to the image management server 40. The input reception unit 12 of the terminal device 10 receives the login operation. Any existing method may be used to perform the login. The following description is given on the assumption that the login is successful.

S102: In response to a successful login, the transmission/reception unit 11 of the terminal device 10 transmits a request for the property designation screen 200 to the image management server 40.

S103: The transmission/reception unit 41 of the image management server 40 receives the request for the property designation screen 200.

The screen generation unit 42 generates the property designation screen 200, and the transmission/reception unit 41 transmits screen information of the property designation screen 200 to the terminal device 10.

S104: The transmission/reception unit 11 of the terminal device 10 receives the screen information of the property designation screen 200. The display control unit 13 displays the property designation screen 200 (see FIG. 9). The user enters property identification information (e.g., V0001) on the displayed property designation screen 200. The input reception unit 12 of the terminal device 10 receives the property identification information.

S105: The transmission/reception unit 11 of the terminal device 10 designates the property identification information and transmits a request for the three-dimensional image information of the property to the image management server 40. Since the terminal device 10 has not logged in to the property information management server 20, the property management screen 210 illustrated in FIG. 10 is not displayed.

S106: The transmission/reception unit 41 of the image management server 40 receives the request, and the storing/reading unit 49 searches the image information management DB 4001 using the property identification information. The storing/reading unit 49 acquires three-dimensional image information of each item. The screen generation unit 42 generates a property display screen 320 on which the three-dimensional image information of each item is arranged. The transmission/reception unit 41 transmits screen information of the property display screen 320 to the terminal device 10. The three-dimensional image information of each item is three-dimensional image information in which all the items included in the property are placed in the property, and the viewpoint is changeable (adjustable) according to a user operation as desired.

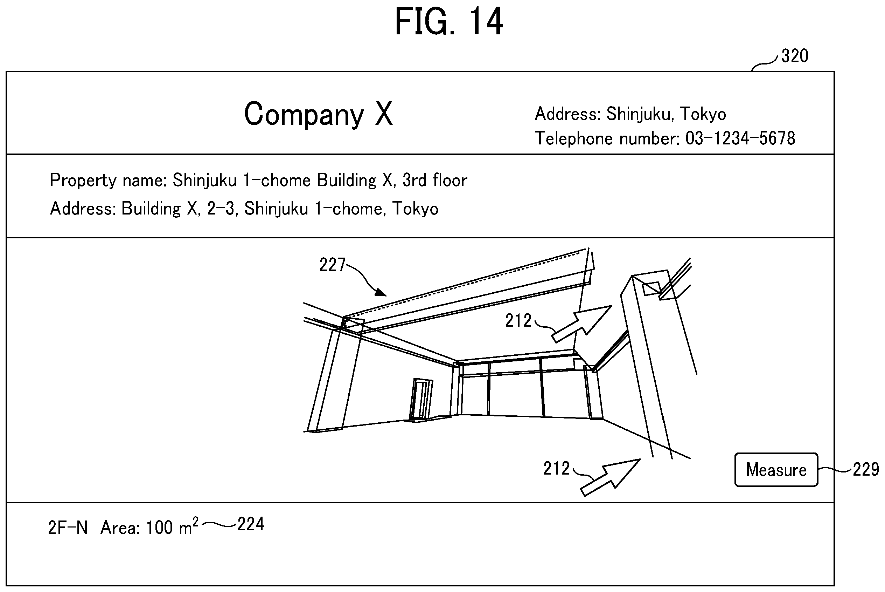

S107: The transmission/reception unit 11 of the terminal device 10 receives the screen information of the property display screen 320, and the display control unit 13 displays the property display screen 320 (see FIG. 14). In the process illustrated in FIG. 13, the terminal device 10 has not logged in to the property information management server 20. Thus, the property display screen 320 does not display the item list 221 (property management information), which is a list of items placed in the property. The screen generation unit 42 may use the image information management DB 4001 managed by the image management server 40 to display information equivalent to the item list 221. Then, the user uses, for example, the mouse cursor 212 to designate two points between which the distance is to be measured with respect to the three-dimensional image information of the property. The input reception unit 12 of the terminal device 10 receives the coordinates of the two points on the item.

S108: In response to the user pressing the measurement button 229, the transmission/reception unit 11 of the terminal device 10 designates the coordinates of the two points and transmits a measurement request to the image management server 40.

S109: The transmission/reception unit 41 of the image management server 40 receives the measurement request. The measurement unit 51 searches the image information management DB 4001 based on the coordinates and identifies the item (model identification information).

The measurement unit 51 further searches the model shape management DB 4002 using the model identification information and acquires the three-dimensional model shape information of the item. The measurement unit 51 measures the distance between the two points defined by the coordinates, based on the three-dimensional model shape information.

S110: The transmission/reception unit 41 of the image management server 40 transmits the measurement result (i.e., the distance between the two points) to the terminal device 10.

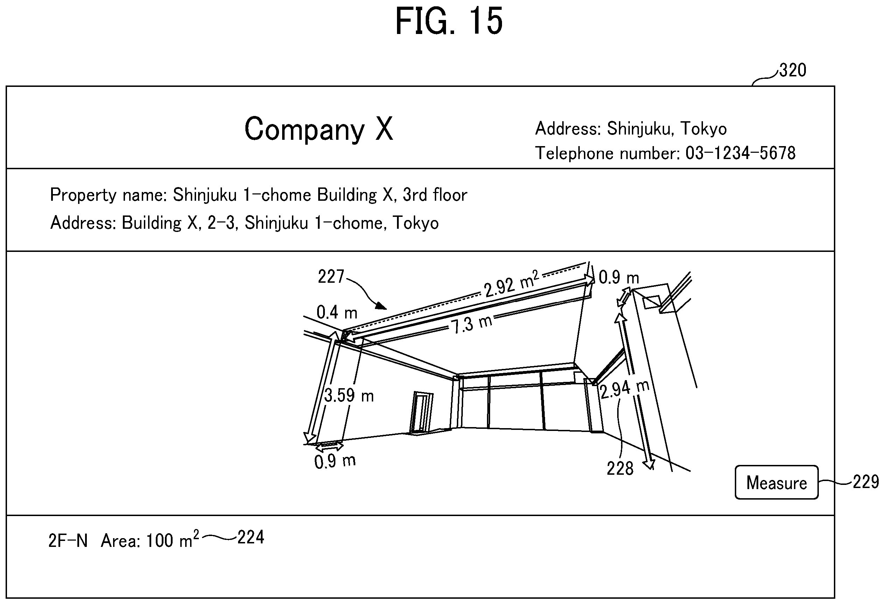

S111: The transmission/reception unit 11 of the terminal device 10 receives the measurement result, and the display control unit 13 displays the measurement result on the property display screen 320 (see FIG. 15).

### Example Screens

The property designation screen 200 is similar to that illustrated in FIG. 9. In a case where the user has logged in directly to the image management server 40, the property management screen 210 illustrated in FIG. 10 is not displayed.

FIG. 14 illustrates the property display screen 320 including the three-dimensional image information of the property. As compared with FIG. 11, the item list 221 is not displayed. This is because the item list 221 is managed by the property information management server 20. The way in which the user designates the coordinates of two points is similar to that illustrated in FIG. 11.

The screen as illustrated in FIG. 14 on which the property management information is not displayed and the three-dimensional image information 227 of the property is displayed is an example of a second display screen.

FIG. 15 illustrates the property display screen 320 on which measurement results are displayed. As compared with FIG. 12, the item list 221 is not displayed. This is because the item list 221 is managed by the property information management server 20. The distance 228 between the two points, which is the measurement result, is the same as that illustrated in FIG. 12.

As described above, in a case where the user has logged in directly to the image management server 40, the terminal device 10 displays the three-dimensional image information 227 of the property. Thus, if the user is not authorized to use the property information management server 20, the image management server 40 can restrict the information managed by the property information management server 20 from being provided to the user.

According to the present embodiment, the image management server 40 performs processing in response to a user logging in to the first server, and performs processing in response to the user logging in to the second server. That is, the terminal device 10 can change the information to be displayed on a single screen depending on whether the user has logged in to the image management server 40 directly or via the property information management server 20. If the user is not authorized to use the property information management server 20, the image management server 40 can restrict the information managed by the property information management server 20 from being provided to the user. In addition, the image management server 40 can provide the same measurement result to the user regardless of whether the user has logged in to the image management server 40 directly or via the property information management server 20.

### Second Embodiment

In a second embodiment, an information processing system 100 selectively uses the first tacit knowledge model 4004A and the second tacit knowledge model 4004B depending on whether a user has logged in to the image management server 40 via the property information management server 20 or has logged in directly to the image management server 40.

In the present embodiment, the hardware configuration diagram of FIG. 2 and the functional block diagram of FIG. 3, which have been described in connection with the first embodiment, can be referenced as well.

### Operation or Processing

### Login to Image Management Server via Property Information Management Server

First, a case in which a user logs in to the image management server 40 via the property information management server 20 is described. Further, a model update process in which the first tacit knowledge model 4004A learns data is described.

### Learning Phase (Model Update)

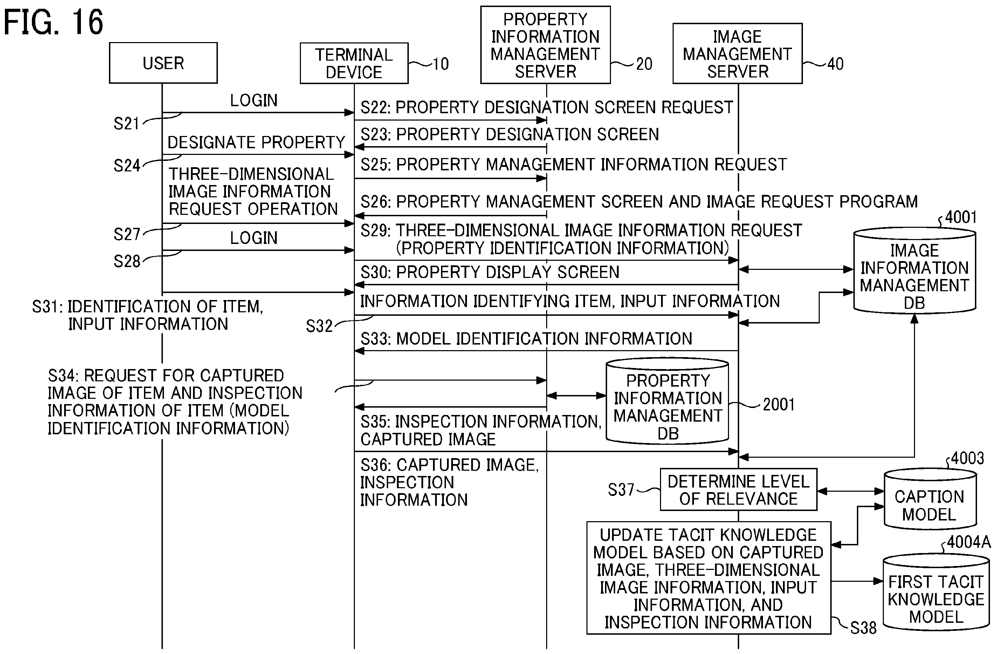

FIG. 16 is a sequence diagram illustrating an example of the model update process. The processing of steps S21 to S30 is similar to or substantially the same as that of steps S1 to S10 in FIG. 8.

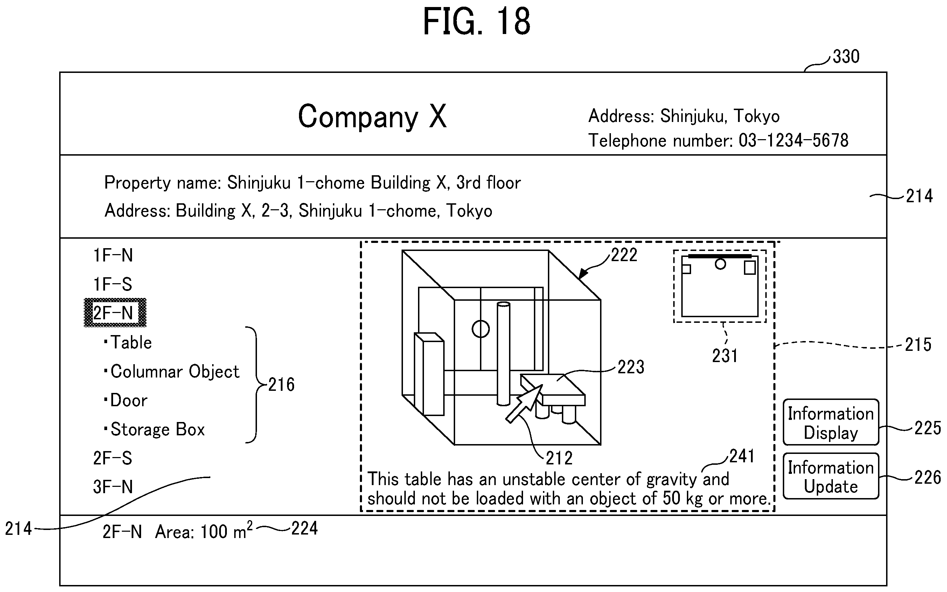

S31: The transmission/reception unit 11 of the terminal device 10 receives the screen information of the screen corresponding to the second display area 215, and the display control unit 13 displays a property display screen 330 (see FIG. 18) including the first display area 214 and the second display area 215. For example, a list of items placed in the property and three-dimensional image information of the property are displayed on a single screen. Then, the user identifies any item from the three-dimensional image information of the property. In response to the user identifying an item, a request can be made to generate inspection information of the item or generate text information using a tacit knowledge model. The input reception unit 12 of the terminal device 10 receives the operation of identifying an item. The item may be identified by, for example, the coordinates of a position clicked on by the user, or model identification information may be identified using the coordinates.

The user enters a comment related to the item, such as the comments (text information or voice) described with reference to FIGs. 6A, 6B, 7A, and 7B, on the terminal device 10. The comment may be referred to as input information. The comment may be a tacit knowledge comment. The comment may include a caption comment describing the item.

S32: In response to the user pressing an information update button 226, the transmission/reception unit 11 of the terminal device 10 transmits information indicating the pressing of the information update button 226, information identifying the item, and the input information to the image management server 40.

S33: The transmission/reception unit 41 of the image management server 40 receives the information indicating the pressing of the information update button 226, the information identifying the item, and the input information. The storing/reading unit 49 identifies, from the image information management DB 4001, model identification information of an item having the closest position information, based on the information identifying the item (here, position information). The transmission/reception unit 41 transmits the model identification information to the terminal device 10. When the information identifying the item in step S32 is model identification information, the image information management DB 4001 is not searched. The reason that the image management server 40 transmits the model identification information is to acquire the latest inspection information and the latest captured image from the property information management server 20.

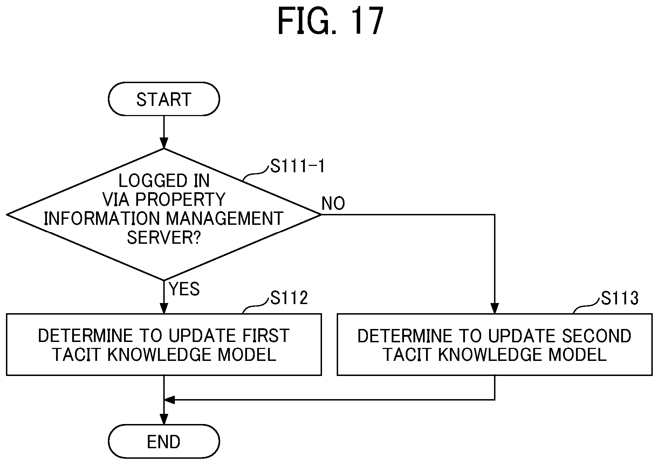

Further, the determination unit 48 determines which of the first tacit knowledge model 4004A and the second tacit knowledge model 4004B is to be updated. Since a login from the image request program, which is used for a login to the property information management server 20, is received in step S28, the determination unit 48 determines that a login to the image management server 40 has been performed via the property information management server 20. Thus, the determination unit 48 determines to update the first tacit knowledge model 4004A. A process in which the determination unit 48 determines a model to be updated is described with reference to FIG. 17.

S34: The transmission/reception unit 11 of the terminal device 10 receives the request for the inspection information and the captured image, together with the model identification information. For example, the image management server 40 notifies the terminal device 10 of the URL of the property information management server 20 and redirects the terminal device 10 to the property information management server 20. As a result, the transmission/reception unit 11 of the terminal device 10 designates the model identification information and transmits the request for the inspection information and the captured image of the item to the property information management server 20.

S35: The transmission/reception unit 21 of the property information management server 20 receives the request for the inspection information and the captured image of the item, and the storing/reading unit 29 searches the property information management DB 2001 using the model identification information and acquires the inspection information and the captured image. The transmission/reception unit 21 transmits the inspection information and the captured image to the terminal device 10.

S36: In response to receipt of the inspection information and the captured image, the transmission/reception unit 11 of the terminal device 10 designates the model identification information and transmits the inspection information and the captured image to the image management server 40.

S37: The transmission/reception unit 41 of the image management server 40 receives the inspection information and the captured image. The storing/reading unit 49 stores the inspection information and the captured image in the image information management DB 4001 in association with the model identification information. The decision unit 43 acquires a caption comment identified by the model identification information from the caption model 4003, and determines the level of relevance between the caption comment and the comment included in the input information received in step S32. In one example, the decision unit 43 may determine the level of relevance of the entire comment included in the input information received in step S32 to the acquired caption comment. In another example, the decision unit 43 may divide the comment included in the input information received in step S32 into multiple comments and determine the level of relevance of each of the divided comments to the acquired caption comment.

S38: The update unit 46 updates the caption model 4003 by associating the comment determined to have a high level of relevance in step S37, as a caption comment, with the model identification information.

The update unit 46 further updates the first tacit knowledge model 4004A determined by the determination unit 48.

The update unit 46 updates the first tacit knowledge model 4004A using, as training data, the comment determined to have a low level of relevance in step S37, the inspection information, and the three-dimensional image information (identified in step S32) and the captured image of the item related to the comment and the inspection information. That is, the correspondence between the three-dimensional image information and the captured image of the item and the combination of the comment and the inspection information is learned. Features are extracted from the three-dimensional image information and the captured image of the item using some feature extraction models suitable for images, such as CNN models. The features represent, for example, objects that appear in an image and positions of the objects appearing in the image, or operations that are being performed in the image. Thus, the first tacit knowledge model 4004A can learn the correspondence between the features of the three-dimensional image information and the captured image of the item and the combination of the comment and the inspection information.

Not both of the comment and the inspection information but at least one of the comment and the inspection information can be used to update the first tacit knowledge model 4004A.

FIG. 17 is a flowchart illustrating a process of the determination unit 48 to determine whether to update the first tacit knowledge model 4004A or the second tacit knowledge model 4004B. In FIG. 17, the determination unit 48 determines whether the user has logged in to the image management server 40 via the property information management server 20 (S111-1). The determination unit 48 can determine whether the user has logged in to the image management server 40 via the property information management server 20, based on whether the user has logged in using the image request program distributed from the property information management server 20.

If the determination in step S111-1 is "YES", the determination unit 48 determines to update the first tacit knowledge model 4004A (S112).

If the determination in step S111-1 is "NO", the determination unit 48 determines to update the second tacit knowledge model 4004B (S113).

While a model to be updated is illustrated as an example in FIG. 17, the illustrated process can also be applied to selection of a model to be used to generate text information.

### Example Screens

The property designation screen 200 in the learning phase is similar to that illustrated in FIG. 9, and the property management screen 210 in the learning phase is similar to that illustrated in FIG. 10. In contrast, in place of the property display screen 220 illustrated in FIG. 11, a screen as illustrated in FIG. 18 is used.

FIG. 18 illustrates the property display screen 330 including property management information and three-dimensional image information. The property display screen 330 includes the first display area 214 and the second display area 215. The first display area 214 displays an item list 216 and a size (floor area) 224. The items in the room of interest include a table, a columnar object, a door, and a storage box. The second display area 215 on the property display screen 330 displays three-dimensional image information 222 and a layout diagram 231 of the items such as the table. The layout diagram 231 is a plan view depicting the locations of the items placed in the property. The user has entered input information 241 that can be a tacit knowledge comment. Thus, in response to the user pointing to three-dimensional image information 223 of the table, the second display area 215 displays the input information 241 stating, "This table has an unstable center of gravity and should not be loaded with an object of 50 kg or more". The image management server 40 can update the first tacit knowledge model 4004A using the input information 241 and the inspection information. The size (floor area) 224 may be a caption comment as the information related to the property.

In response to the user pressing the information update button 226, the first tacit knowledge model 4004A is updated. In response to the pressing of an information display button 225, text information is generated based on a tacit knowledge comment generated by the first tacit knowledge model 4004A.

### Inference Phase (Text Information Generation)

Next, a text information generation process using the first tacit knowledge model 4004A is described.

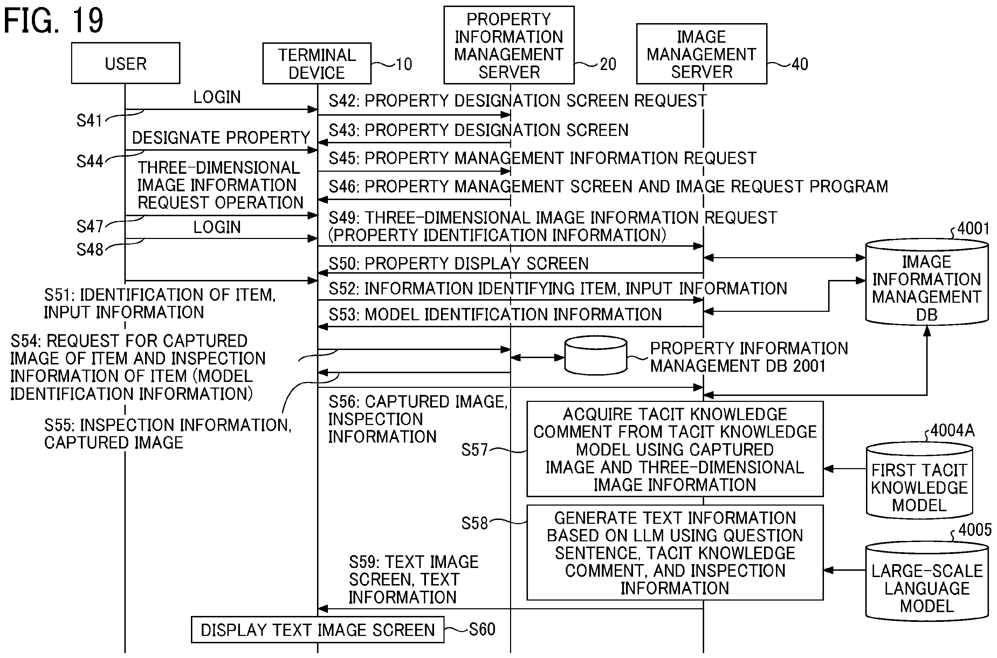

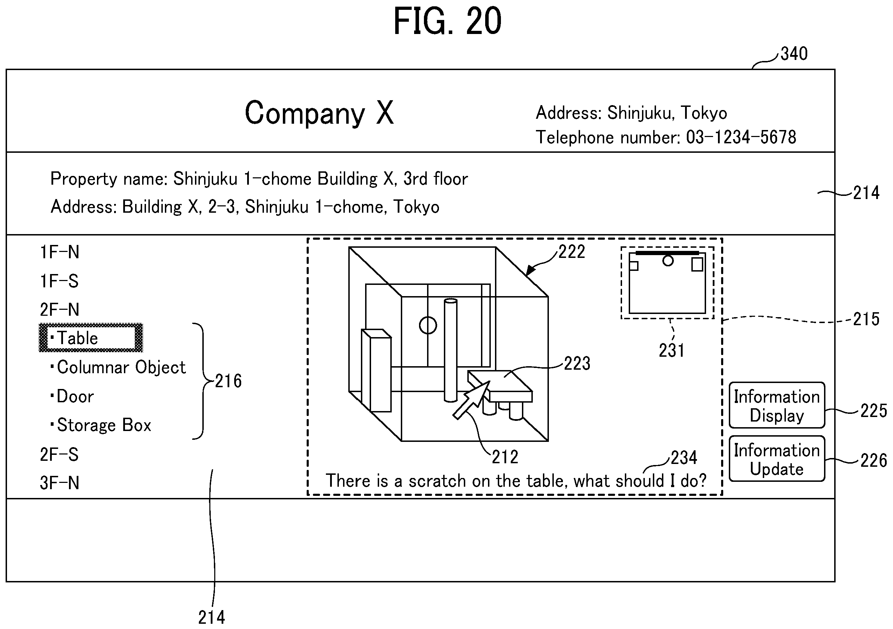

FIG. 19 is a sequence diagram illustrating an example of the text information generation process. In the description of FIG. 19, differences from FIG. 16 may mainly be described. The processing of steps S41 to S56 is similar to that of steps S21 to S36 in FIG. 16. Note that, in step S51, the user enters a question sentence and then presses the information display button 225 (see FIG. 20).

S57: The determination unit 48 determines which of the first tacit knowledge model 4004A and the second tacit knowledge model 4004B is to be used to generate text information. Since a login from the image request program, which is used for a login to the property information management server 20, is received in step S48, the determination unit 48 determines that a login to the image management server 40 has been performed via the property information management server 20. Thus, the determination unit 48 determines to use the first tacit knowledge model 4004A to generate text information.

In response to the transmission/reception unit 41 of the image management server 40 receiving the inspection information, the storing/reading unit 49 identifies the item using the model identification information and stores the latest inspection information and the latest captured image in the image information management DB 4001. The processing unit 47 requests the text information generation unit 45 to generate text information. The text information generation unit 45 acquires a tacit knowledge comment corresponding to the three-dimensional image information and the captured image of the item from the first tacit knowledge model 4004A. The first tacit knowledge model 4004A can extract features from the three-dimensional image information and the captured image of the item and identify at least one of the inspection information corresponding to the features and the input information (comment) as a tacit knowledge comment. The three-dimensional image information of the item is the three-dimensional image information of the item identified by the user in step S51. The user may designate three-dimensional image information of a plurality of items or all of the items.

S58: Then, the text information generation unit 45 uses the tacit knowledge comment, the input information (question sentence), and the inspection information to acquire text information created by the large-scale language model 4005. The large-scale language model 4005 can generate more detailed text information using the tacit knowledge comment, the input information (question sentence), and the inspection information. The text information generation unit 45 may convert voice information included in the input information into character information. The text information generated by the text information generation unit 45 may be either voice information or character information.

The text information generation unit 45 may generate text information without using any inspection information or any question sentence. Alternatively, the text information generation unit 45 may generate a fixed question within the information processing system 100 in advance and use the fixed question to generate text information. In this case, the question sentence is invisible to the user. Alternatively, the text information generation unit 45 may generate fixed questions within the information processing system 100 in advance, cause the display unit to display the fixed questions to prompt the user to select any of the fixed questions, and use the selected question.

As described above, the inspection information is optional. However, using the inspection information to generate text information from the large-scale language model 4005 provides more detailed information related to the item. For example, when the inspection information includes the severity of a scratch on the item, text information including appropriate measures to be taken in accordance with the severity of the scratch can be generated.

S59: The processing unit 47 requests the screen generation unit 42 to display the three-dimensional image information and the captured image of the item corresponding to the model identification information, and the text information in association with each other. The screen generation unit 42 generates a screen corresponding to the second display area 215 for displaying the text information and the three-dimensional image information and the captured image of the item in association with each other. The screen generation unit 42 may perform an update process for adding the text information to the screen corresponding to the second display area 215. The transmission/reception unit 41 of the image management server 40 transmits screen information of the screen corresponding to the second display area 215 to the terminal device 10, and the transmission/reception unit 11 of the terminal device 10 receives the screen information of the screen corresponding to the second display area 215 transmitted from the image management server 40.

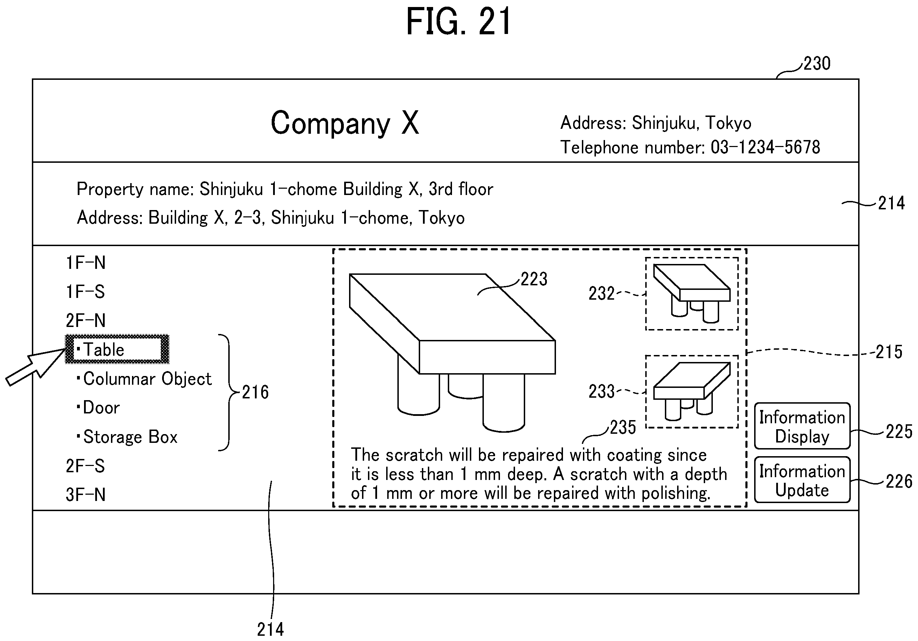

S60: The display control unit 13 of the terminal device 10 displays a text image screen 230 (see FIG. 21) including the first display area 214 and the second display area 215 that includes the text information. Alternatively, the conversion unit 15 converts the received text information into voice information, and the audio control unit 14 causes the speaker 109a to reproduce the converted text information. When the received text information is voice information, the text information is reproduced by the speaker 109a, or the conversion unit 15 converts the received text information into character information and the display 106a displays the converted text information.

### Example Screens in Inference Phase

Among the screens displayed on the terminal device 10 in the inference phase, the property designation screen 200 is similar to that illustrated in FIG. 9, and the property management screen 210 is similar to that illustrated in FIG. 10. In contrast, in place of the property display screen 220 illustrated in FIG. 11, a screen as illustrated in FIG. 20 is used.

FIG. 20 is a diagram illustrating an example of a property display screen 340 in the inference phase. The property display screen 340 includes the first display area 214 and the second display area 215. FIG. 20 illustrates the same configuration as that illustrated in FIG. 18, except that the user presses the three-dimensional image information 223 of the table and enters a question sentence 234 as input information. The second display area 215 displays the input information (question sentence) 234 in association with the three-dimensional image information 223 of the table. For example, the question sentence 234 illustrated in FIG. 20 states, "There is a scratch on the table, what should I do?" The user presses the information display button 225 to make a request to generate text information using the tacit knowledge model, together with the question sentence 234. Accordingly, the text information generation unit 45 generates text information using the first tacit knowledge model 4004A and the large-scale language model 4005.

The screen as illustrated in FIG. 20 on which the property management information (the room number list and the names of the items) and the three-dimensional image information 222 of the property are displayed is an example of a first display screen.

FIG. 21 is a diagram illustrating an example of the text image screen 230 including the text information. The text image screen 230 includes the first display area 214 and the second display area 215. Since the user has made a request for a tacit knowledge comment on the table, in FIG. 21, the second display area 215 displays the three-dimensional image information 223 of the table and captured images 232 and 233 of the table. The three-dimensional image information 223 is acquired from the image management server 40, and the captured images 232 and 233 are acquired from the property information management server 20.

The text image screen 230 further includes text information 235. The text information 235 is displayed in the second display area 215 in association with the three-dimensional image information 223 of the table. The text information 235 states, "The scratch will be repaired with coating since it is less than 1 mm deep. A scratch with a depth of 1 mm or more will be repaired with polishing". The text information 235 is generated by the large-scale language model 4005 using the tacit knowledge comment, the inspection information, and the question sentence. For example, when a scratch is detected in the captured images 232 and 233 of the item, a tacit knowledge comment related to the scratch on the item is extracted. The tacit knowledge comment, the question sentence related to the scratch, and the inspection information specifying the current state of the scratch are input to the large-scale language model 4005, and thus text information appropriate for a question related to the current state of the scratch can be generated.

### Effects of Generating Text Information Using Inspection Information

The effects of generating text information using inspection information as in the present embodiment are described.
1. Comparative Example 1 (Case of Using General Large-Scale Language Model)
   Question sentence: The user asks a question, "How should I repair a crack?"
   Tacit knowledge comment: You can use tape or filler to repair it.
2. Comparative Example 2 (Case of Learning Three-Dimensional Image Information)
   Learning Phase
   Input image: Three-dimensional image information
   Comment: Please use tape for a large width crack and filler for a small width crack.
   Inference Phase
   Input image: Three-dimensional image information
   Question sentence: "How should I repair a crack?"
   Tacit knowledge comment: There are a large width crack and a small width crack, so the use of tape is recommended for the large width crack and the use of filler is recommended for the small width crack.
3. Present Embodiment (Three-Dimensional Image Information and Captured Image)
   Learning Phase
   Input image: Three-dimensional image information and captured image
   Inspection information: Crack in tape at corner
   Inference Phase
   Input image: Three-dimensional image information and captured image
   Question sentence: "How should I repair a crack?"
   Tacit knowledge comment: There are a large width crack and a small width crack, so the use of tape is recommended for the large width crack and the use of filler is recommended for the small width crack. Please be careful when applying tape to the corner, as a crack may occur.
   That is, an effect obtained by learning the inspection information is the comment: "Please be careful when applying tape to the corner, as a crack may occur".
4. Present Embodiment (Three-dimensional Image Information, Captured Image, and Input Information)
   Learning Phase
   Input image: Three-dimensional image information and captured image
   Input information: Please use tape for a large width crack and filler for a small width crack.
   Inspection information: Crack in tape at corner
   Inference Phase
   Input image: Three-dimensional image information and captured image
   Question sentence: "How should I repair a crack?"
   Tacit knowledge comment: There are a large width crack and a small width crack, so the use of tape is recommended for the large width crack and the use of filler is recommended for the small width crack. Please be careful when applying tape to the corner, as a crack may occur.
   That is, an effect obtained by learning the inspection information is the comment: "Please be careful when applying tape to the corner, as a crack may occur".

### Direct Login to Image Management Server

Next, a case in which the user logs in directly to the image management server 40 is described. Further, a model update process in which the second tacit knowledge model 4004B learns data is described.

### Learning Phase (Model Update)

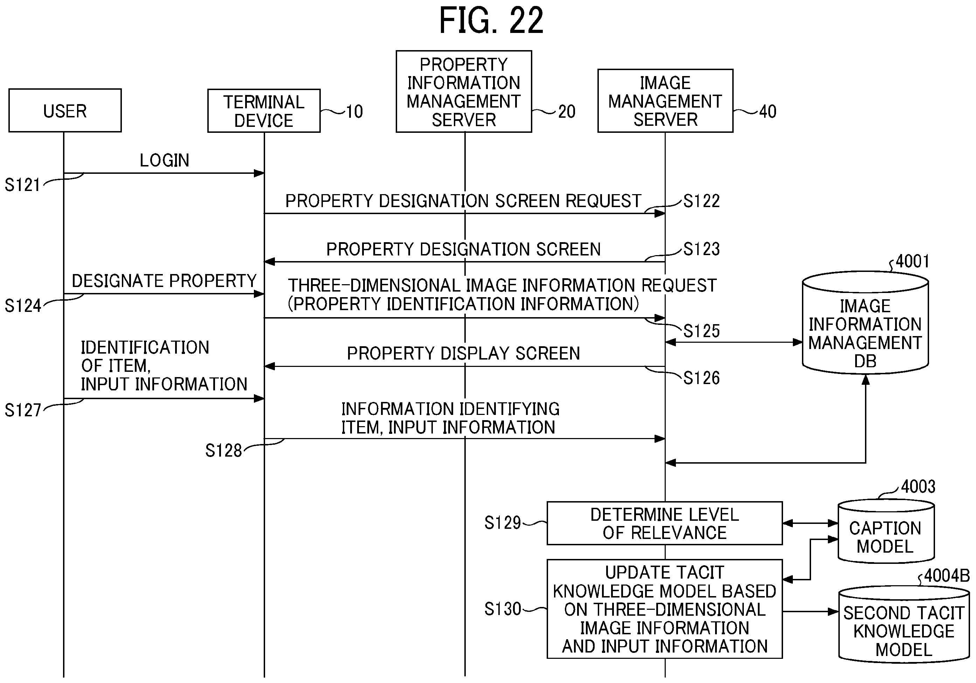

FIG. 22 is a sequence diagram illustrating an example of the model update process. The processing of steps S121 to S126 is similar to that of steps S101 to S106 in FIG. 13.

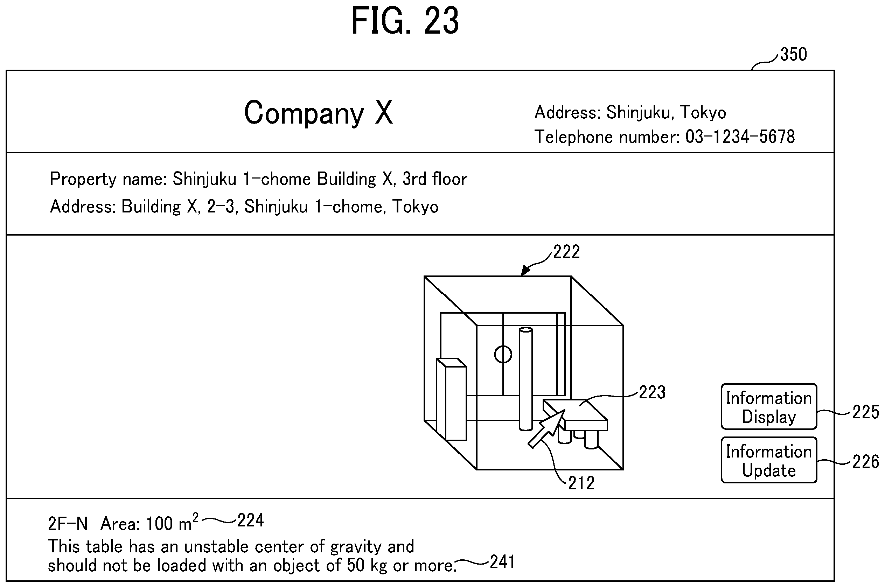

S127: The transmission/reception unit 11 of the terminal device 10 receives three-dimensional image information of a property display screen 350, and the display control unit 13 displays the property display screen 350 (see FIG. 23). In the present embodiment, the terminal device 10 has not logged in to the property information management server 20. Thus, the item list 216, which is a list of items placed in the property, is not displayed. The screen generation unit 42 may use the image information management DB 4001 managed by the image management server 40 to display information equivalent to the item list 216. Then, the user identifies any item from the three-dimensional image information of the property. In response to the user identifying an item, a request can be made to update the second tacit knowledge model 4004B. The input reception unit 12 of the terminal device 10 receives the operation of identifying an item. The item may be identified by, for example, the coordinates of a position clicked on by the user, or model identification information may be identified using the coordinates.

The user enters a comment related to the item, such as the comments (text information or voice) described with reference to FIGs. 6A, 6B, 7A, and 7B, on the terminal device 10. The comment may be referred to as input information. The comment may be a tacit knowledge comment. The comment may include a caption comment describing the item.

S128: In response to the user pressing the information update button 226, the transmission/reception unit 11 of the terminal device 10 transmits information indicating the pressing of the information update button 226, information identifying the item, and the input information to the image management server 40. The transmission/reception unit 41 of the image management server 40 receives the information indicating the pressing of the information update button 226, the information identifying the item, and the input information. The determination unit 48 determines which of the first tacit knowledge model 4004A and the second tacit knowledge model 4004B is to be updated. Since the determination unit 48 determines that the login in step S121 is not a login using the image request program distributed from the property information management server 20, the determination unit 48 determines to update the second tacit knowledge model 4004B.

S129: The decision unit 43 acquires a caption comment identified by the model identification information from the caption model 4003, and determines the level of relevance between the caption comment and the comment included in the input information received in step S128. In one example, the decision unit 43 may determine the level of relevance of the entire comment included in the input information received in step S128 to the acquired caption comment. In another example, the decision unit 43 may divide the comment included in the input information received in step S128 into multiple comments and determine the level of relevance of each of the divided comments to the acquired caption comment.

S130: The update unit 46 updates the caption model 4003 by associating the comment determined to have a high level of relevance in step S129, as a caption comment, with the model identification information. The update unit 46 also updates the second tacit knowledge model 4004B using, as training data, the comment determined to have a low level of relevance in step S129 and the three-dimensional image information (identified in step S128) of the item related to the comment. That is, the correspondence between the three-dimensional image information of the item and the comment is learned. Features are extracted from the three-dimensional image information of the item using some feature extraction models suitable for images, such as CNN models. The features represent, for example, objects that appear in an image and positions of the objects appearing in the image, or operations that are being performed in the image. Thus, the second tacit knowledge model 4004B can learn the correspondence between the features of the three-dimensional image information of the item and the comment.

### Example Screens

The property designation screen 200 to be displayed on the terminal device 10 in the learning phase is similar to that illustrated in FIG. 9. The screen illustrated in FIG. 10, which is generated by the property information management server 20, is not displayed. The property display screen 350 according to the present embodiment is described with reference to FIG. 23.

FIG. 23 illustrates the property display screen 350 according to the present embodiment. As compared with FIG. 18, the item list 216 is not displayed in FIG. 23. This is because the terminal device 10 has directly logged in to the image management server 40. The user presses the three-dimensional image information 223 of the table to enter the input information 241, which can be a tacit knowledge comment, and then presses the information update button 226. As a result, the image management server 40 starts the update of the second tacit knowledge model 4004B.

The screen as illustrated in FIG. 23 on which the property management information (such as the room numbers in the property and the names of the items) is not displayed and the three-dimensional image information 222 of the property is displayed is an example of a second display screen.

### Inference Phase (Text Information Generation)

Next, a text information generation process using the second tacit knowledge model 4004B is described.

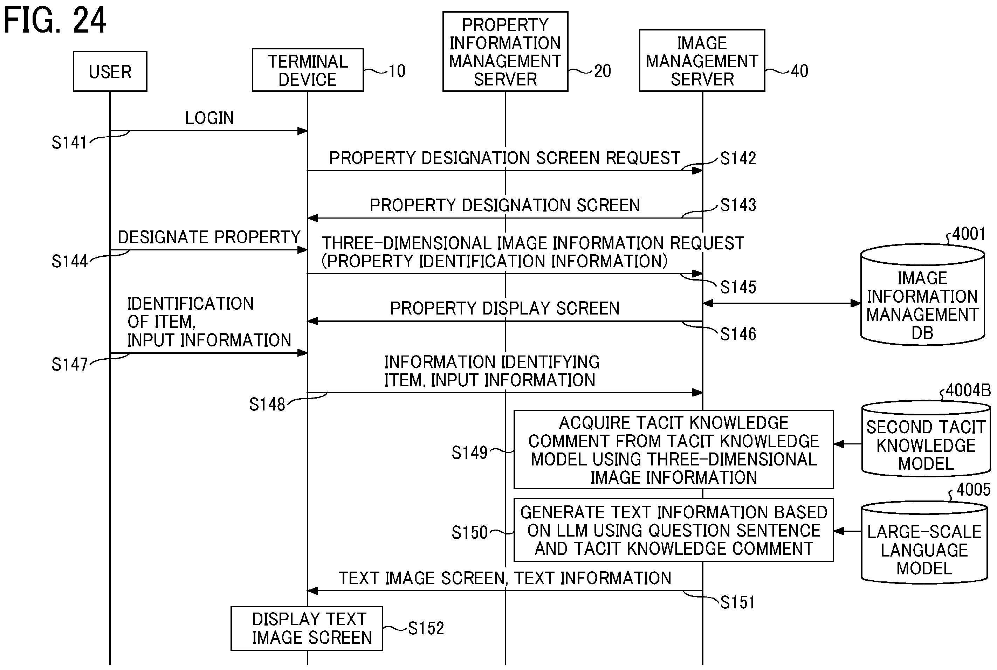

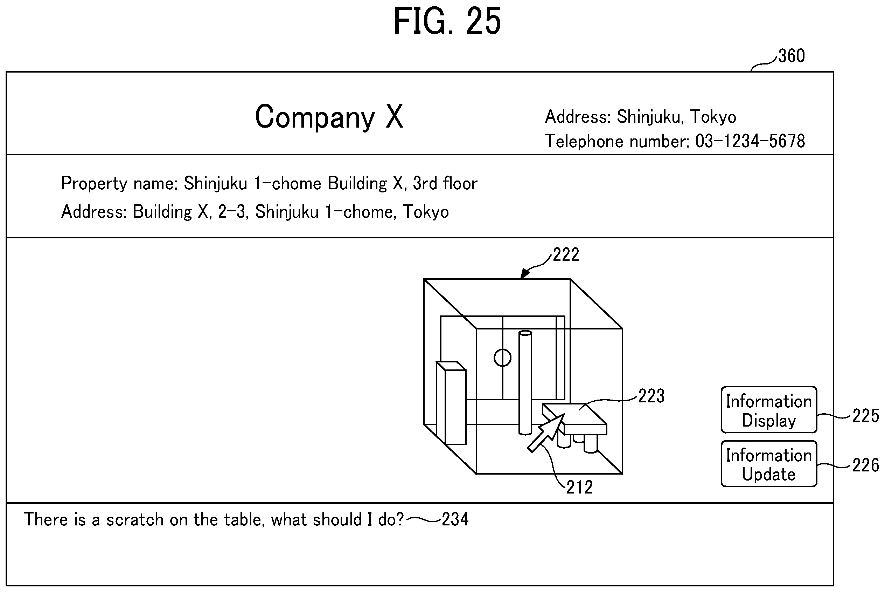

FIG. 24 is a sequence diagram illustrating an example of the text information generation process. In the description of FIG. 24, differences from FIG. 22 may mainly be described. The processing of steps S141 to S148 is similar to that of steps S121 to S128 in FIG. 22. Note that, in step S147, the user enters a question sentence and then presses the information display button 225 (see FIG. 25).

S149: In response to the user pressing the information display button 225, the transmission/reception unit 11 of the terminal device 10 transmits information indicating the pressing of the information display button 225, information identifying the item, and the input information to the image management server 40. The transmission/reception unit 41 of the image management server 40 receives the information indicating the pressing of the information display button 225, the information identifying the item, and the input information. The determination unit 48 determines which of the first tacit knowledge model 4004A and the second tacit knowledge model 4004B is to be used to generate text information. Since the determination unit 48 determines that the login in step S141 is not a login using the image request program distributed from the property information management server 20, the determination unit 48 determines to use the second tacit knowledge model 4004B.

The processing unit 47 requests the text information generation unit 45 to generate text information. The text information generation unit 45 acquires a tacit knowledge comment corresponding to the three-dimensional image information of the item from the second tacit knowledge model 4004B. The second tacit knowledge model 4004B can extract features from the three-dimensional image information of the item and identify inspection information corresponding to the features as a tacit knowledge comment.

S150: Then, the text information generation unit 45 uses the tacit knowledge comment and the input information (question sentence) to acquire text information created by the large-scale language model 4005. The large-scale language model 4005 can generate more detailed text information using the tacit knowledge comment and the input information (question sentence). The text information generation unit 45 may convert voice information included in the input information into character information. The text information generated by the text information generation unit 45 may be either voice information or character information.

The text information generation unit 45 may generate text information without using any question sentence.

Alternatively, the text information generation unit 45 may generate a fixed question within the information processing system 100 in advance and use the fixed question to generate text information. In this case, the question sentence is invisible to the user. Alternatively, the text information generation unit 45 may generate fixed questions within the information processing system 100 in advance, cause the display unit to display the fixed questions to prompt the user to select any of the fixed questions, and use the selected question.

The processing unit 47 requests the screen generation unit 42 to display the three-dimensional image information of the item corresponding to the model identification information and the text information in association with each other. The screen generation unit 42 generates a screen corresponding to the second display area 215 for displaying the text information and the three-dimensional image information of the item in association with each other. The screen generation unit 42 may perform an update process for adding the text information to the screen corresponding to the second display area 215.

S151: The transmission/reception unit 41 of the image management server 40 transmits the generated text information to the terminal device 10 together with screen information of a text image screen 370. The transmission/reception unit 11 of the terminal device 10 receives the screen information of the text image screen 370 and the text information transmitted from the image management server 40.

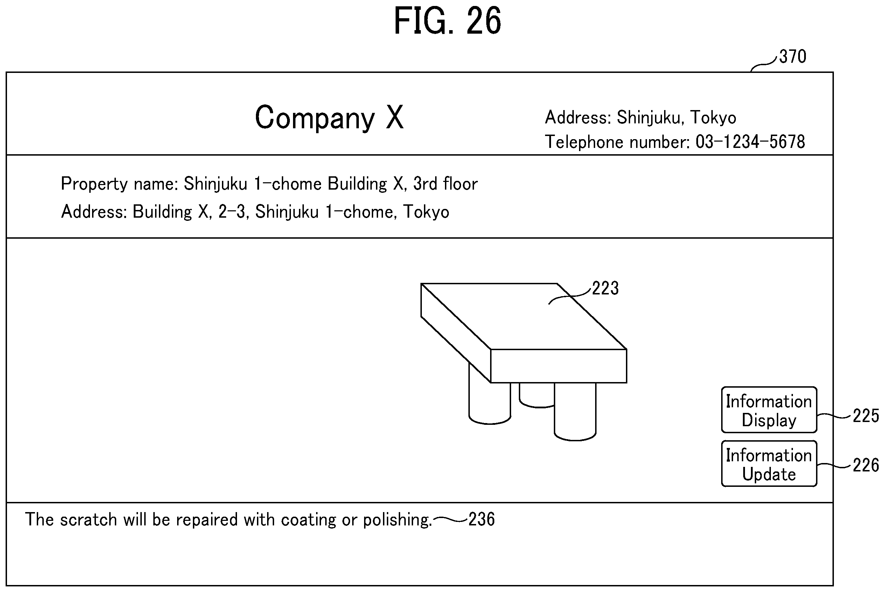

S152: The display control unit 13 of the terminal device 10 displays the text image screen 370 (see FIG. 26) including the text information. Alternatively, the conversion unit 15 converts the received text information into voice information, and the audio control unit 14 causes the speaker 109a to reproduce the converted text information. When the received text information is voice information, the text information is reproduced by the speaker 109a, or the conversion unit 15 converts the received text information into character information and the display 106a displays the converted text information.

### Example Screens in Inference Phase

Among the screens displayed on the terminal device 10 in the inference phase, the property designation screen 200 is similar to that illustrated in FIG. 9, whereas the property management screen 210 illustrated in FIG. 10 is not displayed. In contrast, in place of the property display screen 220 illustrated in FIG. 11, a screen as illustrated in FIG. 25 is used.

FIG. 25 is a diagram illustrating an example of a property display screen 360 in the inference phase. FIG. 25 illustrates the same configuration as that illustrated in FIG. 20, except that the item list 216 is not displayed. This is because the terminal device 10 has not logged in to the property information management server 20. The user presses the three-dimensional image information 223 of the table to enter a question sentence 234, and then presses the information display button 225 to make a request to generate text information using the tacit knowledge model. Accordingly, the text information generation unit 45 generates text information using the second tacit knowledge model 4004B and the large-scale language model 4005.

The screen as illustrated in FIG. 25 on which the property management information (such as the room numbers in the property and the names of the items) is not displayed and the three-dimensional image information 222 of the property is displayed is an example of a second display screen.

FIG. 26 is a diagram illustrating an example of the text image screen 370 including the text information. The text image screen 370 includes text information 236. The text information 236 states, "The scratch will be repaired with coating or polishing". The text information 236 is generated by the large-scale language model 4005 using the tacit knowledge comment generated by the second tacit knowledge model 4004B and the input information (question sentence). Thus, even when a scratch is detected from the three-dimensional image information of the item, the tacit knowledge comment does not reflect the inspection information. In addition, the large-scale language model 4005 does not use inspection information to generate text information.

For this reason, when the text information 236 illustrated in FIG. 26 is compared with the text information 235 illustrated in FIG. 21, the text information 236 is general text information regarding the scratch on the table and is inferior to the text information 235 in terms of detail displayed. However, the text information 236 is versatile information with respect to the scratch on the table.

Example in which Image Management Server Acquires Inspection Information from Property Information Management Server

In FIGs. 16 and 19, the image management server 40 acquires, from the terminal device 10, the inspection information acquired by the terminal device 10 from the property information management server 20. However, the image management server 40 may acquire the inspection information directly from the property information management server 20.

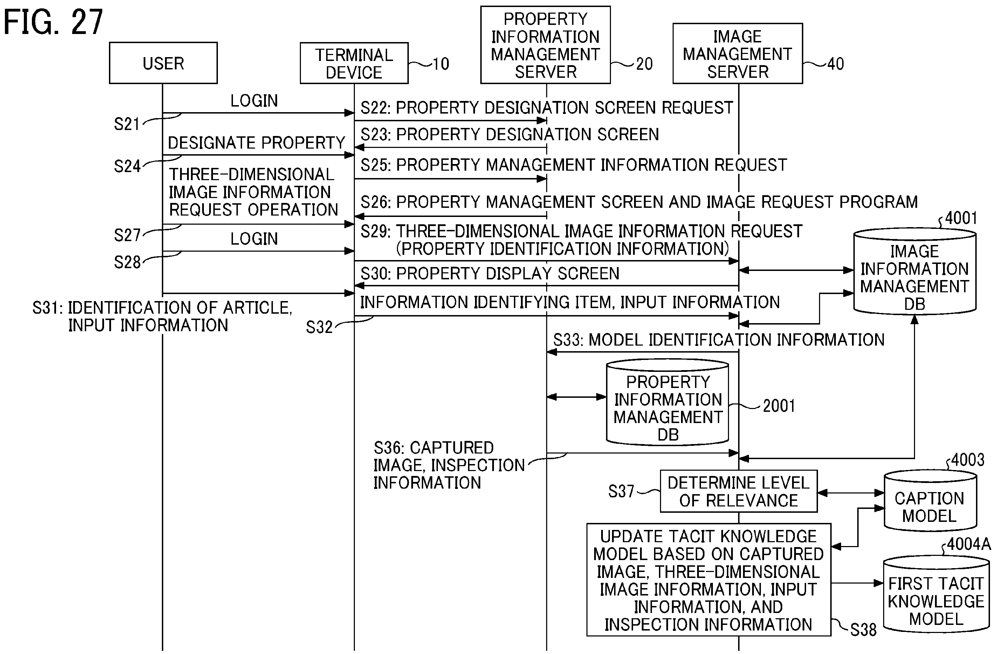

FIG. 27 is a sequence diagram illustrating an example of a process in which the image management server 40 updates a model through communication with the property information management server 20. While differences from FIG. 16 will mainly be described with reference to FIG. 27, the sequence diagram of FIG. 19 is also modified in a similar manner. The processing of steps S21 to S32 is similar to that in FIG. 16.

S33: The transmission/reception unit 41 of the image management server 40 receives the information indicating the pressing of the information update button 226, the information identifying the item, and the input information. The storing/reading unit 49 identifies, from the image information management DB 4001, model identification information of an item having the closest position information, based on the information identifying the item (here, position information). The processing unit 47 requests the transmission/reception unit 41 to acquire the inspection information and the captured image. In response to calling the API of the property information management server 20, the transmission/reception unit 41 designates the model identification information and transmits a request for the inspection information and the captured image to the property information management server 20. When the information identifying the item is model identification information, the image information management DB 4001 is not searched.

S36: The transmission/reception unit 21 of the property information management server 20 receives the request for the inspection information and the captured image. The storing/reading unit 29 searches the property information management DB 2001 using the model identification information and acquires the inspection information and the captured image. The transmission/reception unit 21 transmits the inspection information and the captured image to the image management server 40.

The subsequent processing is similar to that in FIG. 16. In FIG. 27, the process in which the image management server 40 acquires the inspection information and the captured image from the property information management server 20 is described with reference to the sequence diagram at the time of model update. The same applies to the time of text information generation illustrated in FIG. 19.

### Criterion for Determining Server to which User Logs in

The text information obtained by the user is different depending on whether the user logs in to the image management server 40 or the property information management server 20. A determination criterion for determining to which of the image management server 40 and the property information management server 20 the user logs in is described.

As described above, the first tacit knowledge model 4004A and the second tacit knowledge model 4004B have the following differences.

The first tacit knowledge model 4004A can generate an expert opinion and text information specific to a specific item.

The second tacit knowledge model 4004B can generate an expert opinion and general-purpose text information that can be applied to all items of the same type (or category).

For example, the specific item is a centrifugal chiller used by a customer. In this case, the inspection history and the know-how of the item, which is owned by the customer, have been accumulated. The user uses the accumulated information and the first tacit knowledge model 4004A and determines to generate accurate text information (e.g., an answer) specific to the specific item.

Although such accurate information is not found for all items of the same type (refrigerators in the category of centrifugal chillers), there is expertise related to the general centrifugal chillers. In this case, accordingly, it is considered that the user uses the second tacit knowledge model 4004B to generate general-purpose text information (e.g., an answer) that can be applied to all items of the same type. As described above, the user can determine whether to use the inspection information to generate text information, based on the degree of detail of information to be used.

The determination unit 48, rather than the user, may determine whether to use the inspection information and the captured image to generate text information, automatically (without prompting the user for confirmation) or semi-automatically (by making a recommendation and prompting the user for confirmation). For example, when the question sentence included in the input information (voice or text) is related to inspection information of an item, the determination unit 48 determines to use the first tacit knowledge model 4004A because the second tacit knowledge model 4004B may fail to generate appropriate text information.

The number of types of tacit knowledge models is not limited to two and may be three or more, and the user may select a desired tacit knowledge model.

### Multimodal

Some examples of combinations of input information and tacit knowledge comments are described. The model described above is assumed to be a large-scale language model. However, the present embodiment can use a multimodal model that receives a plurality of data formats (e.g., image, text, and gesture) as inputs and outputs a predetermined data format.
- Case where the input information is a character string and content other than text information is generated as a tacit knowledge comment

A character string is input, and an image is generated. A character string is input, and a moving image is generated. A character string is input, and a voice is generated. A character string is input, and a 3D model is generated.
- Case where the input information includes a character string and non-character string information and text information is generated as a tacit knowledge comment

An image and a character string are input, and text information is generated. A 3D model and a character string are input, and text information is generated. A voice and a character string are input, and text information is generated.
- Case where the input information includes a character string and non-character string information and content other than text information is generated as a tacit knowledge comment

An image and a character string are input, and an image is generated. A moving image and a character string are input, and a moving image is generated. A 3D model and a character string are input, and a 3D model is generated. A voice and a character string are input, and a voice is generated.

According to the present embodiment, the image management server 40 can selectively use the first tacit knowledge model 4004A, which is trained using the inspection information, and the second tacit knowledge model 4004B, which is trained without using the inspection information. That is, the first tacit knowledge model 4004A is used to generate detailed text information for a user who has logged in to the image management server 40 via the property information management server 20, and the second tacit knowledge model 4004B is used to generate versatile text information for a user who has logged in directly to the image management server 40.

### Third Embodiment

A third embodiment describes the information processing system 100 in which the image management server 40 executes a simulation. The simulation is a function available on the image management server 40 but not available when the terminal device 10 is connected to the property information management server 20.

In the present embodiment, the hardware configuration diagram of FIG. 2 and the functional block diagram of FIG. 3, which have been described in connection with the first embodiment, can be referenced as well.

### Operation or Processing

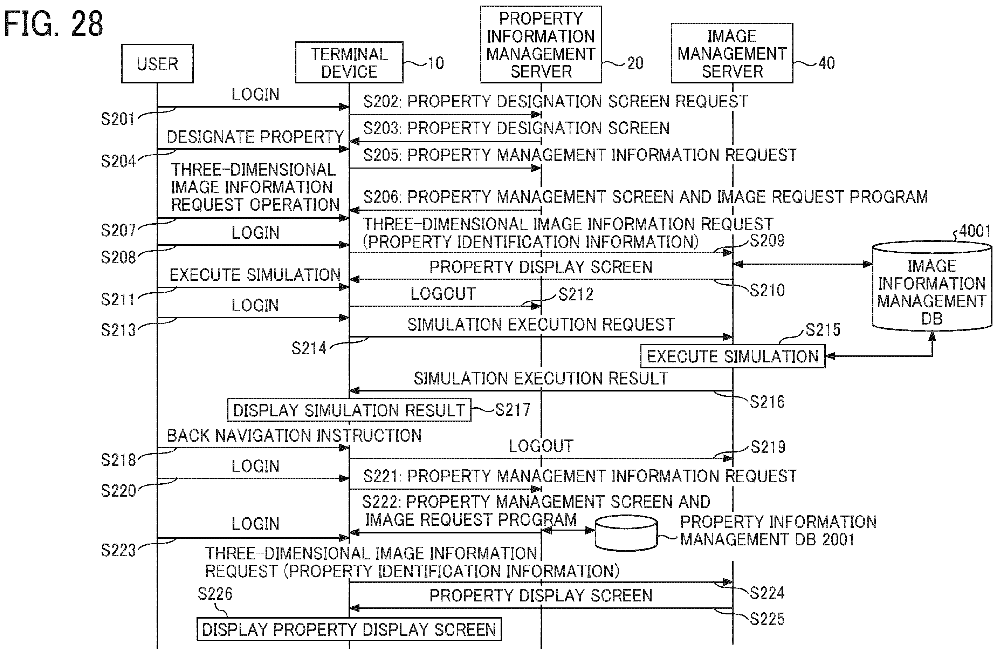

FIG. 28 is a sequence diagram illustrating an example of a process in which the image management server 40 executes a simulation. The processing of steps S201 to S210 is similar to that of steps S1 to S10 in FIG. 8.

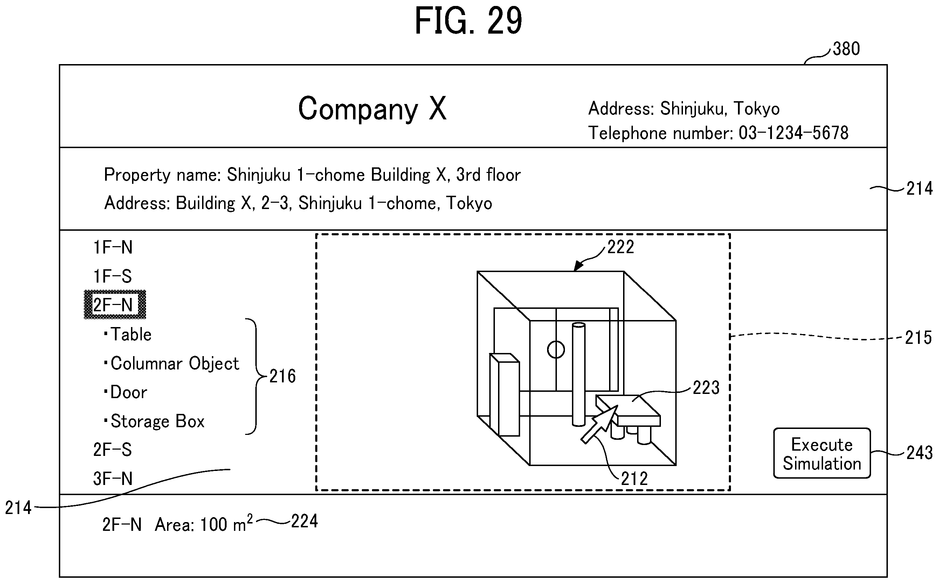

S211: The transmission/reception unit 11 of the terminal device 10 receives screen information of a property display screen 380, and the display control unit 13 displays the property display screen 380 (see FIG. 29). The user presses a simulation execution button 243 to perform a simulation related to a property or an item. The input reception unit 12 receives the pressing of the simulation execution button 243.

S212: Since the simulation is a function of the image management server 40, the transmission/reception unit 11 logs out of the property information management server 20. This is because the image management server 40 executes a simulation while the user remains logged in to the image management server 40, but not to the property information management server 20.

S213: Then, the user inputs a login operation to the terminal device 10. The image request program preferably prompts the user to log in to the image management server 40. This login is to log in to the image management server 40. The input reception unit 12 of the terminal device 10 receives the login operation. Any existing method may be used to perform the login. The following description is given on the assumption that the login is successful. Since the user has already logged in to the image management server 40 in step S208, the login in step S213 may be omitted.

S214: In response to a successful login, the transmission/reception unit 11 of the terminal device 10 transmits a simulation execution request to the image management server 40. Because of logging in to the property information management server 20 later, the transmission/reception unit 11 may transmit, for example, the URL of the property information management server 20 to the image management server 40 for redirection.

S215: The transmission/reception unit 41 of the image management server 40 receives the simulation execution request. The simulation unit 52 executes a simulation. Any simulation may be executed. All of the simulations executable by the image management server 40 may be executed, or a simulation designated by the user may be executed.

S216: The screen generation unit 42 of the image management server 40 generates a simulation result screen 390, and the transmission/reception unit 41 of the image management server 40 transmits screen information of the simulation result screen 390 to the terminal device 10.

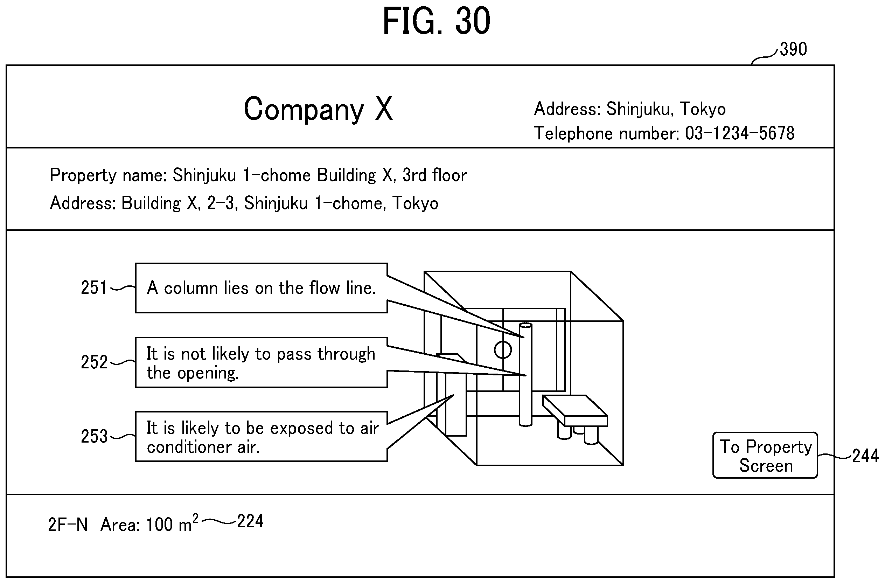

S217: The transmission/reception unit 11 of the terminal device 10 receives the screen information of the simulation result screen 390, and the display control unit 13 displays the simulation result screen 390 (see FIG. 30).

S218: After the completion of the simulation, the user inputs a back navigation instruction to the terminal device 10 to display the property display screen 380. The input reception unit 12 receives the input.

S219: The transmission/reception unit 11 logs out of the image management server 40 to connect the terminal device 10 to the property information management server 20.

S220: The user inputs a login operation to the terminal device 10. This login is to log in to the property information management server 20. The input reception unit 12 of the terminal device 10 receives the login operation. Any existing method may be used to perform the login. The following description is given on the assumption that the login is successful. Because of logging in to the image management server 40 later, the transmission/reception unit 11 may transmit, for example, the URL of the image management server 40 to the property information management server 20 for redirection.

S221: The transmission/reception unit 11 of the terminal device 10 designates the property identification information and transmits a request for the property management information to the property information management server 20.

S222: The transmission/reception unit 21 of the property information management server 20 receives the request for the property management information, and the storing/reading unit 29 searches the property information management DB 2001 using the property identification information. The screen generation unit 22 of the property information management server 20 generates a property management screen 210 (see FIG. 10) for displaying the property management information, and the transmission/reception unit 21 transmits screen information of the property management screen 210 to the terminal device 10.

In response to the request for the property management information, furthermore, the transmission/reception unit 21 transmits an image request program to the terminal device 10 so that the terminal device 10 can acquire three-dimensional image information.

The transmission/reception unit 11 of the terminal device 10 receives the screen information of the property management screen 210 and the image request program. The display control unit 13 displays the property management screen 210. As a result, the property management information is displayed.

S223: The user inputs a login operation to the terminal device 10. The image request program preferably prompts the user to log in to the image management server 40. This login is to log in to the image management server 40. The input reception unit 12 of the terminal device 10 receives the login operation. For example, single sign-on may be used to omit the login operation.

S224: Since the three-dimensional image information of the property has been displayed previously, the transmission/reception unit 11 of the terminal device 10 can designate the property identification information of the property and transmit a request for the three-dimensional image information of the property to the image management server 40 without the user performing an operation for making a request for the three-dimensional image information of the property. However, the user may designate the property identification information again. The transmission/reception unit 11 preferably transmits the property management information acquired from the property information management server 20. This is because the image management server 40 causes the terminal device 10 to display the property management information and the three-dimensional image information of the property on a single screen.

S225: The transmission/reception unit 41 of the image management server 40 receives the property management information and the request for the three-dimensional image information of the property. The storing/reading unit 49 of the image management server 40 searches the image information management DB 4001 using the property identification information and acquires three-dimensional image information of each item. The processing unit 47 requests the screen generation unit 42 to generate a screen including the property management information and the three-dimensional image information of each property. The screen generation unit 42 generates a property display screen 380 on which the property management information and the three-dimensional image information of each item are arranged. The transmission/reception unit 41 transmits screen information of the property display screen 380 to the terminal device 10. The three-dimensional image information of each item is three-dimensional image information in which all the items included in the property are placed in the property, and the viewpoint is changeable (adjustable) according to a user operation as desired.

S226: The transmission/reception unit 11 of the terminal device 10 receives the screen information of the property display screen 380, and the display control unit 13 displays the property display screen 380 (see FIG. 29).

### Example Screens

FIG. 29 illustrates an example of the property display screen 380 according to the present embodiment. In the description of FIG. 29, differences from FIG. 18 will mainly be described. The property display screen 380 illustrated in FIG. 29 includes the simulation execution button 243. The input information 241 (the question sentence) is not input. In response to the user pressing the three-dimensional image information 223 of the table and pressing the simulation execution button 243, the image management server 40 executes a simulation.

The screen as illustrated in FIG. 29 on which the property management information (such as the room numbers in the property and the names of the items) and the three-dimensional image information 222 of the property are displayed is an example of a first display screen.

FIG. 30 illustrates an example of the simulation result screen 390. The simulation result screen 390 displays the result of the simulation executed on the three-dimensional image information of the property. The property management information is not displayed on the simulation result screen 390. This is because the terminal device 10 has directly logged in to the image management server 40.

While three simulation results 251 to 253 are displayed in FIG. 30, three simulation results are merely an example. For example, the simulation result 251 designates a column and provides the alert: "A column lies on the flow line". The simulation result 252 designates the column and provides the alert: "It is not likely to pass through the opening". The simulation result 253 designates a storage box and provides the alert: "It is likely to be exposed to air conditioner air".

The simulation result screen 390 further includes a back button 244 for returning to the property display screen 380. The pressing of the back button 244 for returning to the property display screen 380 corresponds to the back navigation instruction. Pressing the back button 244 for returning to the property display screen 380 allows the user to make a transition to the property display screen 380 illustrated in FIG. 29.

The screen as illustrated in FIG. 30 on which the property management information (such as the room numbers in the property and the names of the items) is not displayed and the three-dimensional image information 222 of the property is displayed is an example of a second display screen.

### Fourth Embodiment

A fourth embodiment describes the image management server 40 that generates an image from a captured image and text information.

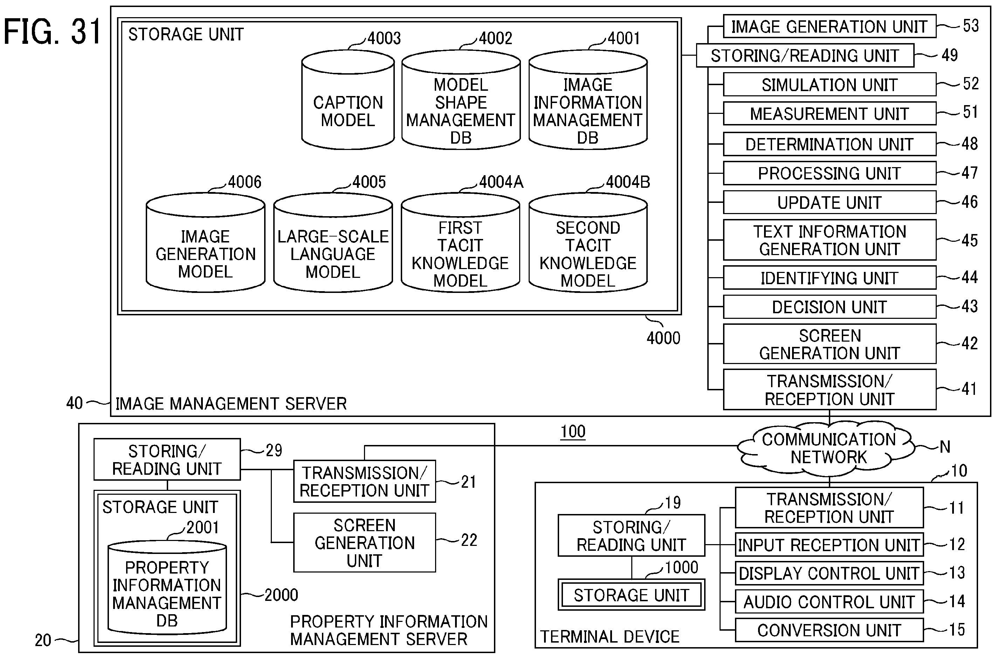

FIG. 31 is a diagram illustrating a functional configuration of an example of functions of the image management server 40, the property information management server 20, and the terminal device 10 in the information processing system 100 according to the present embodiment. In the description of FIG. 31, differences from FIG. 3 will mainly be described.

The image management server 40 illustrated in FIG. 31 further includes an image generation unit 53, and the storage unit 4000 of the image management server 40 further includes an image generation model 4006. The other elements are the same as those in FIG. 3.

The image generation unit 53 is implemented by instructions from the CPU 401 illustrated in FIG. 2. The image generation unit 53 inputs text data into the image generation model 4006 or inputs text data and an image into the image generation model 4006 to generate image information.

The image generation model 4006 is a machine learning model (generative AI) that generates an image from text data or from text data and an image. The image generation model 4006 is trained using, for example, training data including text data and images. The training data includes, for example, text data or text data and an image for learning as an input, and a ground truth image as an output. For example, the image generation model 4006 may be trained such that an image generated by the image generation model 4006 that has received text data or text data and an image included in training data as an input becomes close to a ground truth image included in the training data.

### Learning Phase

The process in the learning phase is similar to that illustrated in FIG. 16. In step S38, the update unit 46 updates the first tacit knowledge model 4004A so as to learn the correspondence between the comment determined to have a low level of relevance in step S37 and the inspection information as inputs and the three-dimensional image information or the captured image of the item as an output. Alternatively, the update unit 46 updates the first tacit knowledge model 4004A so as to learn the correspondence between the comment, the inspection information, and the three-dimensional image information (or the captured image) of the item as inputs and the captured image (or the three-dimensional image information) as an output.

### Inference Phase (Text Information Generation)

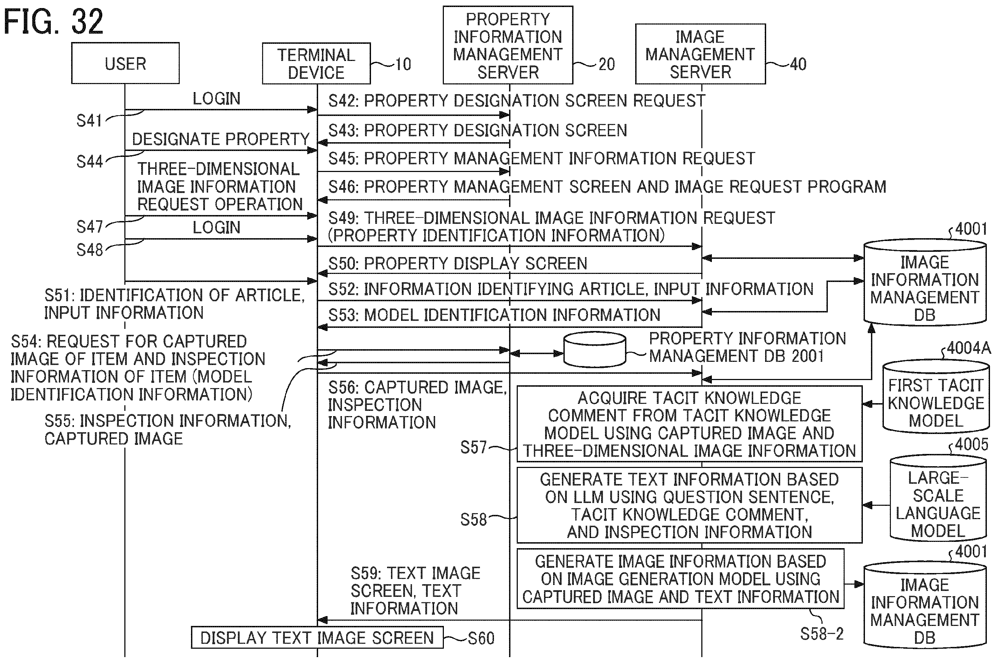

FIG. 32 is a sequence diagram illustrating an example of a process for generating text information and image information. In the description of FIG. 32, differences from FIG. 19 may mainly be described. In FIG. 32, step S58-2 is further included.

S58-2: The image generation unit 53 inputs the captured image and the text information created by the large-scale language model 4005 into the image generation model 4006 to generate image information. The image generation unit 53 may use the text information created by the large-scale language model 4005, without using the captured image, to acquire the image information created by the image generation model 4006.

The storing/reading unit 49 stores the text information created by the large-scale language model 4005 and the image information created by the image generation model 4006 in the image information management DB 4001 (or overwrites the information stored in the image information management DB 4001 with the text information created by the large-scale language model 4005 and the image information created by the image generation model 4006) in association with the captured image and the inspection information stored in the image information management DB 4001 in step S56.

S59: The processing unit 47 requests the screen generation unit 42 to display the three-dimensional image information of the item corresponding to the model identification information, the generated image information, and the text information in association with each other. The screen generation unit 42 generates a screen corresponding to the second display area 215 for displaying the three-dimensional image information of the item, the generated image information, and the text information. The transmission/reception unit 41 of the image management server 40 transmits screen information of the screen corresponding to the second display area 215 to the terminal device 10. The transmission/reception unit 11 of the terminal device 10 receives the screen information of the screen corresponding to the second display area 215 transmitted from the image management server 40.

### Example Screen in Inference Phase

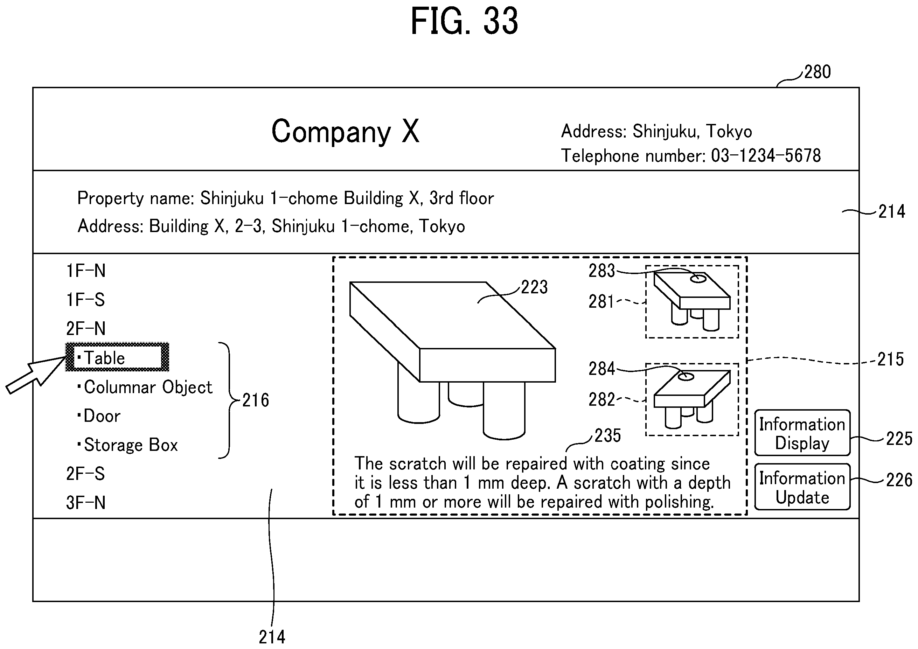

FIG. 33 is a diagram illustrating the generated image information, which is displayed on a text image screen 280. In the description of FIG. 33, differences from FIG. 21 will mainly be described.

The text image screen 280 illustrated in FIG. 33 displays generation images 281 and 282. The generation images 281 and 282 are not the captured images 232 and 233 illustrated in FIG. 21, respectively, but are generation images that have been generated by the image generation model 4006 based on the captured images 232 and 233 and the text information 235. For this reason, the generation images 281 and 282 include markers 283 and 284, respectively, indicating the positions of a scratch.

According to the present embodiment, for example, when the user executes a function unique to the image management server 40, such as a simulation function, the terminal device 10 logs out of the property information management server 20 and logs in to the image management server 40. Accordingly, the function of the image management server 40 can be provided to the user who remains logged in to the image management server 40.

### Other Application Examples

The present disclosure is not limited to the above-described embodiments specifically disclosed herein, and various modifications and changes may be made without departing from the scope of the appended claims. The image management server 40 described in the embodiments described above is an example, and various example system configurations are available depending on the application or purpose.

For example, in the embodiments described above, a tacit knowledge model for an industry such as civil engineering or architecture answers a question, by way of example. However, the tacit knowledge model may be used in any industry in which tacit knowledge is effective, such as medical care, dental care, or investment decisions.

**In** the embodiments described above, furthermore, the large-scale language model 4005 generates text information based on a tacit knowledge comment. **In** another example, the large-scale language model 4005 is not used, and a tacit knowledge comment may be used as text information.

The first tacit knowledge model 4004A may be a model obtained by learning tacit knowledge comments using three-dimensional image information, a captured image, and inspection information as inputs and using input information as an output. That is, different forms of information, such as an image and text, may be used as inputs.

The image management server 40 may use both the first tacit knowledge model 4004A and the second tacit knowledge model 4004B, rather than either of them, to generate two pieces of text information.

That is, the image management server 40 uses at least one of the first tacit knowledge model 4004A and the second tacit knowledge model 4004B to generate text information.

In the embodiments described above, furthermore, the information processing system 100 is a client-server system. However, the functions of the image management server 40 may be installed in the terminal device 10 as applications. That is, the user may be allowed to use the functions presented in the embodiments described above in a stand-alone manner.

In the example configurations such as the example configuration illustrated in FIG. 3, the configuration is divided according to main functions to facilitate understanding of processing performed by the image management server 40. No limitation on the present disclosure is intended by how the functions are divided by process or by the name of the functions. The processing of the image management server 40 may be divided into more processing units in accordance with the content of the processing. The division may be performed so that each processing unit includes multiple processing operations.

Each of the functions in the above-described embodiments may be implemented by one or more pieces of processing circuitry. As used herein, the term "processing circuitry" includes processors programmed to implement each function by software, such as a processor implemented by an electronic circuit, and devices designed to implement the functions described above, such as an application specific integrated circuit (ASIC), a digital signal processor (DSP), a field programmable gate array (FPGA), and existing circuit modules.

The apparatuses or devices described in one or more embodiments are just one example of plural computing environments that implement the one or more embodiments disclosed herein. In some embodiments, the image management server 40 includes multiple computing devices, such as a server cluster. The multiple computing devices communicate with one another through any type of communication link including a network, a shared memory, or the like and perform the processes disclosed herein.

Further, the image management server 40 may perform the processing steps disclosed herein in various combinations. The elements of the image management server 40 may be integrated into one apparatus or divided into multiple apparatuses. The processes performed by the image management server 40 may be performed by the terminal device 10.

In Aspect 1, an information processing system includes a first server, a second server, and a terminal device. The first server manages a two-dimensional image of an item and information related to the item. The second server manages three-dimensional image information of the item. The terminal device communicates with the first server and the second server. The terminal device includes an input reception unit and a display control unit. The display control unit displays a first display screen including the information related to the item and the three-dimensional image information of the item, the information related to the item being received from the first server while a session is established with the first server, the three-dimensional image information of the item being received from the second server while a session is established with the first server and a session is established with the second server, and displays a second display screen including the three-dimensional image information of the item, the three-dimensional image information of the item being received from the second server while a session is established with the second server. The second server includes a processing unit. The processing unit executes processing based on the three-dimensional image information of the item and input information received by the input reception unit of the terminal device via the first display screen, or a processing based on the three-dimensional image information of the item and input information received by the input reception unit of the terminal device via the second display screen.

According to Aspect 2, in the information processing system of Aspect 1, the display control unit displays, on the first display screen, a result of the processing executed by the processing unit based on the three-dimensional image information of the item and the input information received by the input reception unit via the first display screen, and displays, on the second display screen, a result of the processing executed by the processing unit based on the three-dimensional image information of the item and the input information received by the input reception unit via the second display screen.

According to Aspect 3, in the information processing system of Aspect 2, the processing unit measures a distance between two points received by the input reception unit with respect to the three-dimensional image information of the item displayed on the first display screen, and measures a distance between two points designated in the input information with respect to the three-dimensional image information of the item displayed on the second display screen.

According to Aspect 4, in the information processing system of Aspect 2, the processing unit executes a processing for associating the two-dimensional image of the item transmitted from the first server, the three-dimensional image information of the item, and generation information generated based on the two-dimensional image and the three-dimensional image information with each other, and the display control unit displays, on the first display screen, the two-dimensional image of the item, the three-dimensional image information of the item, and the generation information, the two-dimensional image of the item, the three-dimensional image information of the item, and the generation information being acquired from the second server.

According to Aspect 5, in the information processing system of any of Aspects 1 to 4, the second server acquires the information related to the item and the two-dimensional image that are transmitted from the first server, and the second server further includes a first model, a second model, and a determination unit. The first model is obtained by learning a correspondence between a combination of the three-dimensional image information of the item and the two-dimensional image and the information related to the item or a correspondence between a combination of the three-dimensional image information of the item and the two-dimensional image and a combination of the information related to the item and input information input to the terminal device. The second model is obtained by learning a correspondence between the three-dimensional image information of the item and the input information input to the terminal device. The determination unit determines whether to generate text information related to the item by using the three-dimensional image information of the item for which selection is received by the terminal device, the two-dimensional image, the information related to the item, and the first model, or by using the three-dimensional image information of the item for which selection is received by the terminal device and the second model.

According to Aspect 6, in the information processing system of Aspect 5, the determination unit determines whether to use the first model or the second model, based on whether the terminal device has logged in directly to the second server or has logged in to the second server after logging in to the first server.

According to Aspect 7, in the information processing system of Aspect 5, the processing unit executes first processing based on the input information received by the input reception unit via the first display screen, the information related to the item and the two-dimensional image that are acquired from the first server or the information related to the item and the two-dimensional image that are acquired by the terminal device from the first server and transmitted to the second server, and the three-dimensional image information of the item.

According to Aspect 8, in the information processing system of Aspect 7, the first processing includes a processing for generating text information, based on the three-dimensional image information of the item, the two-dimensional image, the information related to the item, the input information received by the input reception unit via the first display screen, and the first model.

According to Aspect 9, in the information processing system of Aspect 8, the first processing further includes a processing for causing the first model to learn a correspondence between a combination of the three-dimensional image information of the item and the two-dimensional image and a combination of the information related to the item and the input information received by the input reception unit via the first display screen to update the first model.

According to Aspect 10, in the information processing system of Aspect 5, the processing unit executes second processing based on the input information received by the input reception unit via the second display screen, and the three-dimensional image information of the item.

According to Aspect 11, in the information processing system of Aspect 10, the second processing includes a processing for generating text information, based on the three-dimensional image information of the item, the input information received by the input reception unit via the first display screen, and the second model.

According to Aspect 12, in the information processing system of Aspect 10, the second processing includes a processing for causing the second model to learn a correspondence between the three-dimensional image information of the item and the input information received by the input reception unit via the first display screen to update the second model.

According to Aspect 13, in the information processing system of Aspect 1, the processing unit executes a third processing, based on the three-dimensional image information of the item managed by the second server.

According to Aspect 14, in the information processing system of Aspect 13, the third processing includes a processing for performing a simulation, based on the three-dimensional image information of the item.

According to Aspect 15, in the information processing system of Aspect 14, in response to the input reception unit receiving a request to execute a simulation while the terminal device remains logged in to the first server, the terminal device logs out of the first server, logs in to the second server, and requests the second server to execute the simulation.

According to Aspect 16, in the information processing system of any one of Aspects 1 to 15, the three-dimensional image information of the item includes information on a two-dimensional projected image of a three-dimensional model shape of the item, and the three-dimensional image information of the item can be displayed with a changeable viewpoint.

According to Aspect 17, in the information processing system of any one of Aspects 1 to 16, the information related to the item includes information input by a user inspecting a state of the item.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (100) comprising:
a first server (20) configured to store information related to an item;
a second server (40) configured to store image information of the item; and
a terminal device (10) configured to communicate with the first server (20) and the second server (40),
the terminal device (10) including:
an input reception unit (12); and
a display control unit (13) configured to:
display a first display screen including the information related to the item and the image information of the item, the information related to the item being received from the first server (20) while a session is established with the first server (20), the image information of the item being received from the second server (40) while a session is established with the first server (20) and a session is established with the second server (40); and
display a second display screen including the image information of the item, the image information of the item being received from the second server (40) while a session is established with the second server (40),
the second server (40) including
a processing unit (47) configured to execute first processing based on the image information of the item and input information received via the first display screen by the input reception unit (12) of the terminal device (10), or second processing based on the image information of the item and input information received via the second display screen by the input reception unit (12) of the terminal device (10).

2. The information processing system (100) according to claim 1, wherein the display control unit (13) is configured to:
display, on the first display screen, a result of the processing executed by the processing unit (47) based on the image information of the item and the input information received via the first display screen by the input reception unit (12), in a case that the first processing is executed; and
display, on the second display screen, a result of the processing executed by the processing unit (47) based on the image information of the item and the input information received via the second display screen by the input reception unit (12), in a case that the second processing is executed.

3. The information processing system (100) according to claim 2, wherein the processing unit (47) is configured to:
measure a distance between two points received by the input reception unit (12) with respect to the image information of the item displayed on the first display screen; and
measure a distance between two points designated in the input information with respect to the image information of the item displayed on the second display screen.

4. The information processing system (100) according to claim 2, wherein
the processing unit (47) is configured to associate, based on the image information of the item and the information related to the item transmitted from the first server (20), the image information of the item with the information related to the item or generation information generated based on the information related to the item, and
the display control unit (13) is configured to display, on the first display screen, the image information of the item and the information related to the item corresponding to the image information or the generation information corresponding to the image information, the image information of the item and the information related to the item or the generation information being acquired from the second server (40).

5. The information processing system (100) according to any of claims 1 to 4, wherein
the second server (40) is configured to acquire the information related to the item transmitted from the first server (20), and
the second server (40) further includes:
a first model trained on a correspondence between the image information of the item and the information related to the item or a correspondence between the image information of the item and a combination of the information related to the item and the input information input to the terminal device (10);
a second model trained on a correspondence between the image information of the item and the input information input to the terminal device (10); and
a determination unit (48) configured to determine whether to use the first model or the second model to generate text information related to the item, the first model being used with the image information of the item for which selection is received by the terminal device (10) and the information related to the item, the second model being used with the image information of the item for which selection is received by the terminal device (10).

6. The information processing system (100) according to claim 5, wherein the determination unit (48) is configured to determine whether to use the first model or the second model, based on whether the terminal device (10) has logged in directly to the second server (40) or has logged in to the second server (40) after logging in to the first server (20).

7. The information processing system (100) according to claim 5, wherein, in a case that the first processing is executed, the processing unit (47) is configured to execute the first processing based on:
the input information received via the first display screen by the input reception unit (12);
the information related to the item acquired from one of the first server (20) and the terminal device (10) that has acquired the information related to the item from the first server (20); and
the image information of the item.

8. The information processing system (100) according to claim 7, wherein the first processing includes generating the text information, based on the image information of the item, the information related to the item, the input information received via the first display screen by the input reception unit (12), and the first model.

9. The information processing system (100) according to claim 8, wherein the first processing includes training the first model on the correspondence between the image information of the item and the combination of the information related to the item and the input information received via the first display screen by the input reception unit (12) to update the first model.

10. The information processing system (100) according to claim 5, wherein, in a case that the second processing is executed, the processing unit (47) is configured to execute the second processing based on the input information received via the second display screen by the input reception unit (12), and the image information of the item.

11. The information processing system (100) according to claim 10, wherein the second processing includes generating the text information, based on the image information of the item, the input information received via the second display screen by the input reception unit (12), and the second model.

12. The information processing system (100) according to claim 10, wherein the second processing includes training the second model on the correspondence between the image information of the item and the input information received via the second display screen by the input reception unit (12) to update the second model.

13. The information processing system (100) according to claim 1, wherein the processing unit (47) is configured to execute third processing based on the image information of the item stored by the second server (40).

14. The information processing system (100) according to claim 13, wherein the third processing is executing a simulation based on the image information of the item.

15. The information processing system (100) according to claim 14, wherein the terminal device (10) is configured to:
in response to the input reception unit (12) receiving a request to execute the simulation while the terminal device (10) is logged in to the first server (20),
log out of the first server (20);
log in to the second server (40); and
request the second server (40) to execute the simulation.
